(19) **Europäisches Patentamt / European Patent Office / Office européen des brevets**

(11) **EP 3 754 274 B1**

(12) # EUROPEAN PATENT SPECIFICATION

(45) Date of publication and mention of the grant of the patent:
**29.04.2026 Bulletin 2026/18**

(21) Application number: **19382520.5**

(22) Date of filing: **20.06.2019**

(51) International Patent Classification (IPC):
**F25D 29/00** *(2006.01)* **G01N 33/02** *(2006.01)*

(52) Cooperative Patent Classification (CPC):
**F25D 29/00; G01K 3/04; F25D 11/003;**
F25D 2500/04; F25D 2700/12

(54) **A COMPUTER IMPLEMENTED METHOD, AND A SYSTEM FOR MONITORING STORAGE QUALITY OF A SPECIFIC FOOD PRODUCT DURING TRANSPORT AND/OR STORAGE OF SAID PRODUCT**

COMPUTERIMPLEMENTIERTES VERFAHREN UND SYSTEM ZUR ÜBERWACHUNG DER LAGERQUALITÄT EINES BESTIMMTEN LEBENSMITTELPRODUKTS WÄHREND DES TRANSPORTS UND/ODER DER LAGERUNG DIESES PRODUKTS

PROCÉDÉ MIS EN OEUVRE PAR ORDINATEUR ET SYSTÈME DE SURVEILLANCE DE LA QUALITÉ DE STOCKAGE D'UN PRODUIT ALIMENTAIRE SPÉCIFIQUE PENDANT LE TRANSPORT ET/OU LE STOCKAGE DUDIT PRODUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2020 Bulletin 2020/52**

(73) Proprietors:
• **Ako Electromecánica S.A.**
  **08812 Sant Pere de Ribes Barcelona (ES)**
• **Institut de Recerca i Tecnologia Agroalimentàries**
  **08140 Caldes De Montbui (ES)**

(72) Inventors:
• **ALBETS CHICO, Xavier**
  **08800 VILANOVA I LA GELTRÚ (ES)**
• **GONZÁLEZ SÁNCHEZ, Miguel Angel**
  **08740 SANT ANDREU DE LA BARCA (ES)**

• **COMAPOSADA BERINGUES, Josep**
  **17468 VILAMARÍ (ES)**
• **MUÑOZ MORENO, Israel**
  **17190 SALT (ES)**
• **BOVER CID, Sara**
  **17121 MONELLS (ES)**
• **JOFRÉ FRADERA, Anna**
  **17165 LA CELLERA DE TER (ES)**

(74) Representative: **Ponti & Partners, S.L.P**
**Edifici PRISMA**
**Av. Diagonal núm. 611-613, Planta 2**
**08028 Barcelona (ES)**

(56) References cited:
WO-A2-2007/081228    CN-A- 108 739 127
KR-B1- 101 912 865    US-A1- 2002 161 545
US-A1- 2007 107 836    US-A1- 2019 147 396

• **DATABASE WPI Week 201901, Derwent World Patents Index; AN 2018-88464M**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a computer implemented method and system for monitoring storage quality of a specific food product, in particular a perishable food product, during transport and/or storage of said product. In addition, the present invention relates to a computer program comprising program code instructions to implement the steps of the monitoring method.

**Background of the invention**

The cold chain is known to be a temperature-controlled supply chain that maintains the temperature of perishable food products below the ambient temperature for maximization of shelf-life, quality and organoleptic aspects (sensory characteristics). The cold chain starts generally at the farm and finishes at the consumer table, either in a domestic environment or for food service industry (delivery, HORECA, etc.).

A poorly controlled supply chain can lead to contaminated foods, which can cause serious illnesses. Therefore, traceability of the cold chain and compliance of HACCP (Hazardous Analysis of Critical Control Points) are aspects of interest for food retail stores and catering services.

There are known systems on the market that are designed to monitor and register storage conditions in real time all along the cold chain of the perishable food product. Quality of most perishable food products is damaged if those products are stored at temperatures outside the optimal storage temperature. Those known systems help to avoid the breakage of the cold chain by providing real time data of sensors installed in refrigerators trucks, distributions centres, and store display cabinets all along the cold chain of the food product.

It is known to control the storage conditions of a food compartment with the aim of preserving perishable food items. US7401469B2 discloses a method for preserving food which controls the preservation of the food in the food compartment as a function of the user supplied input and the sensed humidity level, the ozone level, residual gas level and as a function of a type of the food stored in the compartment. It has been found that modifying the storage conditions of the food compartment as a function of the type of food stored and sensed levels of real-time storage conditions helps to retain food freshness and to avoid over-exposure of the food to humid environments which cause development of fungus and bacteria. Nevertheless, the method of preserving the quality of the food described in the above-mentioned patent document has the drawback that, in case of failure of the system controlling the operation of the food compartment, it does not provide useful information for the user to effectively know the impact of the breakage of the cold chain on the quality of the food product.

It has been found that in practice it is difficult for food retailers to react in front of incidences concerning the breakage of the cold chain. Food retailers lack the expertise to accurately analyse time and storage data and to relate said data to food product quality and safety.

EP1393276B1 discloses a system for monitoring and evaluating the quality and safety of food products as a function of the temperature history and length of stored time. According to the system of this patent document, a management centre receives food product temperature information from a remote location to provide the user interface with an alarm when an associated variable bacteria count has achieved a potentially harmful level or an undesirable level.

The system of document EP1393276B1 has the advantage that provides an alarming routine for signalling to the user when the food product has crossed particular quality limits as regards bacteria grow. Nevertheless, this system has the drawback that it does not allow the user to quantify the impact that incidents affecting storage conditions have on the optimal or desired storage quality of the food product. This information is of utmost importance for taking decisions regarding management of perishable food products. On the other hand, the system does not provide information about the degree of dehydration of the food product all along the cold chain. It must be noted that dehydration is a storage quality variable that directly impacts on the commercial value of perishable food products.

US 2002/161545 A1 and US 2019/147396 A1 disclose further known methods and systems for monitoring and evaluating the quality of stored food products.

**Description of the invention**

The present invention provides a method as specified in each of the independent method claims 1 and 3, and further a system as defined in the independent claim 5.

The present invention relates, in a first and second aspect, to a computer implemented method and system for monitoring storage quality of a specific food product during transport and/or storage, which cover the gaps found in the prior art methods and systems.

According to a third aspect, the present invention also relates to a computer program, comprising program code instructions that when run in a computer or a processor implement the steps of the claimed method.

The specific food product to be monitored is a food product, preferably, a perishable food product, and more preferably a perishable food product selected among at least one of fruits, vegetables, meat, fish and dairy products.

According to the first aspect, the claimed invention provides a computer implemented method for monitoring storage quality of a specific food product comprising the steps of;

- performing and recording, with a given temporal frequency, a plurality of measurements of at least one air ambient parameter of the ambient at which the specific food product is exposed during a pre-set time,
- calculating by means of an equation actual values of a storage quality variable indicative of a storage quality condition of the specific food product, using said measured and recorded values of the at least one air ambient parameter,
- retrieving a desired value of said storage quality variable, said desired value being calculated by means of the same equation using reference values of the at least one air ambient parameter of the ambient at which the specific food product should have been exposed under desired or optimal air ambient conditions,
- wherein said storage quality variable is a variable selected among at least one of water mass transfer rate indicative of water weight loss (dehydration) of the specific food product and shelf-life based time reduction indicative of microbial proliferation of the specific food product,
and wherein the method comprises;
- obtaining a food storage quality index to monitor the storage quality of said specific food product by relating at least one of said actual values of at least one of said storage quality variables with a desired or optimal value of the same storage quality variable.

According to the present invention, said food storage quality index is expressed as a percentile indicating proximity to the desired value of the storage quality variable, or as a time multiplier of the actual time the food product has been exposed to at least one of the air ambient parameters to allow to compute an effective exposed time in terms of the selected storage quality variable, had the food product being exposed to the at least one reference value of the air ambient parameter under desired or optimal air ambient conditions.

In contrast to the known prior art methods for monitoring food quality, the method of the present invention allows to automatically quantify the impact that the deviation from the optimal or desired storage conditions provokes on the optimal or desired storage quality of the product.

In particular, the method allows to quantify, by means of a food storage quality index, how far the actual storage quality of the product is from the reference/optimal one, and more importantly, it allows to compute an effective storage time of the specific food product for a given storage time and a given storage quality variable. This information is very useful for the users to manage nominal cold-chain conditions and to easily take efficient decisions on food storage management for a large number of perishable food products. In fact, with the claimed system, a representative average value of the food storage quality index may be obtained for a given storage time of the cold chain so as to quantify the impact of the actual storage air ambient conditions on the storage quality of the food product during this particular given storage time.

Moreover, the claimed method also allows to quantify the impact that the actual storage air ambient conditions have on the expected nominal weight loss of the product, so that the user is able to react to a deviation by modifying either the storage time or the air ambient conditions to keep the commercial value of the food product close to optimal.

According to the present invention, the step of performing and recording said plurality of measurements of at least one air ambient parameter takes place during a pre-set time of at least two segments of the cold chain of said specific food product, including two or more of the following: production, processing, transport and food-retail and/or food-service.

For one embodiment, the storage quality variable is the water mass transfer rate indicative of water weight loss of the specific food product and said method comprises;

- performing and recording with a given temporal frequency a plurality of measurements of air ambient temperature and air ambient relative humidity of the ambient at which the specific food product is exposed during said pre-set time,
- calculating by means of an equation actual values of the water mass transfer rate of the specific food product using said measured values of air ambient temperature and air ambient relative humidity,
- retrieving a desired value of water mass transfer rate, said desired value being calculated by means of the same equation using reference values of air ambient temperature and air ambient relative humidity at which the specific food product should have been exposed under the desired or optimal air ambient conditions, and
- obtaining a food storage quality drying index to monitor the storage quality of said specific food product by relating at least one of said actual values of water mass transfer rate with the desired or optimal value of the water mass transfer rate.

The claimed method has the advantage that provides a food storage quality drying index which concerns to food storage quality regarding drying conditions (effects of the air ambient temperature and air relative humidity with respect to optimal or desired conditions for a specific food product).

It has been found that the claimed method helps the retailer to increase the freshness of a specific food product by setting as a target indicator a food quality storage index that relates actual values of water mass transfer rate with optimal or desired values of water mass transfer for the specific food product.

Measurement of air ambient parameters on transport trucks and cold rooms at which the product is exposed will be performed and recorded to identify, preferably in real-time or near real-time, whether the value of the drying index settled as a target indicator is sufficient. If necessary, one or several air ambient parameters will be modified to get a pre-determined value of the drying index. Since the value of the drying index is relative to the optimal or desired ambient conditions, a representative average value of the index may be obtained for a given storage time along the cold chain and thus allowing to quantify the impact of the storage conditions in terms of weight loss of the food product during this given storage time.

According to the present invention, the food storage quality drying index is expressed as a percentile (DI) indicating proximity to the desired or optimal value of water mass transfer rate of the specific food product, and computed by the equation;

$$DI = \frac{mt_o}{mt_a} \cdot 100 \qquad [1]$$

where;

$mt_0$ is the desired value of water mass transfer rate (Kg/m$^2$ s) at the reference values of air ambient temperature and air ambient relative humidity, and
$mt_a$ is the calculated values of water mass transfer rate (Kg/m$^2$ s) at the measured values of air ambient temperature and air ambient relative humidity.

In particular, the drying index is defined as the actual evaporation rate (computed as evaporated water in $kg/m^2 s$ at the surface of the food product, with respect to the optimal evaporation rate; being the optimal evaporation rate defined as the one at optimal or desired air ambient temperature and air relative humidity conditions. The optimal or desired air ambient temperature and air relative humidity for a specific food product may be found tabulated in handbooks, for example in; Thompson J., A. Kader, and K. Sylva, 1996. Compatibility chart for fruits and vegetables in short-term transport or storage. Oakland: Univ. Calif. Div. Ag. & Nat. Res. Publ. 21560.

The values for the drying index range from 100 points (when the actual rate is equal or lower than the optimal one, as the drying index DI is limited to 100 points) and tends to 0 points, for an extreme evaporation rate, i.e. extreme drying conditions. Hence, a value of the index equal to 100 points represents an optimal or desired value of storage quality and a value equal to 0 points represents extremely drying conditions. Additionally, in case the actual evaporation rate is much lower than that at optimal or desired air ambient conditions (1/2 log smaller or less), the value of the drying index is corrected as non-quantifiable "condensation risk", since the evaporation is too low and the food product is not able to transpire. It must be noted that, preferably, the drying index is a real-time index, hence a single value is obtained for each sample of air ambient parameters.

According to the present invention, alternatively, the food storage quality drying index is expressed as a time multiplier (DA) of the time the food product has been exposed to said measured and recorded values of air ambient temperature and air ambient relative humidity, computed by the equation;

$$DA = \frac{mt_a}{mt_o} \cdot 1 \qquad [2]$$

where:

$mt_0$ is the desired value of water mass transfer rate (Kg/m$^2$ s) at the reference values of air ambient temperature and air ambient relative humidity, and
$mt_a$ is the calculated values of water mass transfer rate (Kg/m$^2$ s) at the measured values of air ambient temperature and air ambient relative humidity.

In particular, this time multiplier (DA) represents the relative drying rate at the actual air ambient conditions with respect to the optimal or desired air ambient conditions. Indeed, this time multiplier defines the acceleration rate of evaporation mass transfer due to actual air ambient temperature and air ambient relative humidity values.

The values for the time multiplier index (DA) range from *1 x times* (when the actual water mass transfer rate is equal or lower than the optimal or desired one) and tends to *infinity x times,* for extremely adverse drying conditions.

According to the present invention, the method further comprises the step of computing with said food storage quality drying index expressed as a time multiplier (DA) the effective exposed time in terms of water mass transfer rate, had the food product being exposed to the reference values of air ambient temperature and air relative humidity.

When the drying index expressed as a time multiplier (DA) takes values greater than *1 x times,* the indicator can be used as the multiplier of the actual storage time to compute the effective exposed time in terms of water mass transfer rate, had the food product been stored at optimal or desired air ambient conditions. For example, an apple stored 2 days with a computed drying index expressed as a time multiplier *DA = 4xtimes,* will suffer the same weight loss as an apple during DA = 4 x 2 = 8 days at optimal or desired air ambient conditions.

According to the present invention, the actual and the optimal or desired values of water mass transfer rate are calculated by means of the equation;

$$mt = \left( a \cdot mt_{natural} + b \cdot mt_{forced} \right) \qquad [3]$$

Where;

$mt_{natural}$ is the water mass transfer rate (Kg/m$^2$ s) under air natural convection conditions,
$mt_{forced}$ is the water mass transfer rate (Kg/m$^2$ s) under air forced convection conditions,
*a* and *b* are fraction of the exposed time under either air natural or forced convection conditions.

Preferably, water mass transfer from food to bulk ambient is computed under the assumption that fractions *a* and *b* of exposed time under air natural and forced convection equal 0.5 each.

In particular, it is computed following the assumptions that:

a) during refrigeration cycles air is circulating half of the storage time (50% ON, 50% OFF) therefore, evaporation takes place under both forced and natural convection conditions; and
b) typical air velocity is approximately 0.5 m/s for the forced convection conditions.

It must be pointed out that these specific conditions have a very moderate effect on the drying index, either expressed as percentile (DI) or as a time multiplier (DA), as the index is relative to the optimal conditions, where the same assumptions concerning forced convection time and air speed are made. Therefore the drying index captures only effects of temperature and relative humidity with respect to optimal conditions.

Both water mass transfer under forced and natural air convection conditions are computed following known methodology described in; Lienhard J.H., 2008. Heat Transfer Texbook. Third Edition. Phlogiston Press. Cambridge Massachusetts, USA., by means of equations;

$$mt = h_m \cdot 1 / \rho_{iface}^{air} \cdot (Y_1 - Y_2) \quad [4]$$

$$h_m = (Sh \cdot \delta_{iface}^{air}) / L$$

$$Sh = 0.27 \cdot (Ra)^{1/4}$$

$$Sh = 0.664 \cdot (Re)^{1/2} \cdot (S_c)^{1/3}$$

$$Ra = 9.81 \cdot \left( \rho_{bulk}^{air} - \rho_{iface}^{air} \right)^{1/2} \cdot (L)^3 / (\mu\delta)_{iface}^{air}$$

$$Re = (D \cdot v \cdot \rho_{iface}^{air}) / (\mu)_{iface}^{air}$$

where;

$mt$ is water mass transfer rate (Kg/m$^2$ s),
$h_m$ is a mass transfer coefficient obtained by correlations (m/s),
$Y_1$ is water content in the bulk air (-),

$Y_2$ is water content of the food product, computed directly from its water activity (preferably, assumed generally at 0.99, typical for perishable food products) and the partial vapour pressure at the food product temperature (-),

$Sh$ is a dimensionless *Sherwood* number (-),

$L$ is a characteristic length corresponding to an inverse of a second characteristic length, which for this invention has been modelled as a flat plate of 0.1 m X 0.1 m, although could be considered differently and therefore not limited to this convective configuration only,

$\delta_{iface}$ is water diffusivity of air at the interface food-ambient temperature (m²/s),

$Ra$ is a *Rayleigh* number used under natural convections cases when computing $mt_{natural}$ and considering a flat plate (-),

$Re$ is a *Reynolds* number used under forced convection cases when computing $mt_{forced}$ and considering a flat plate (-),

$v$ is air velocity, preferably assumed to be 0.5 m/s,

$\mu_{iface}$ is air viscosity at the interface food-ambient temperature (Kg/m s),

$\rho_{iface}$ is density of air at the interface food-ambient temperature (Kg/m³),

$\rho_{bulk}$ is density of the bulk air at storage air ambient temperature (Kg/m³).

Advantageously, the calculation of the food product temperature (which must be slightly lower with respect to the bulk air temperature, as per latent heat effects of the evaporation) and the interface food-ambient temperature (assumed as an average between the food and the bulk air temperatures) are computed assuming a thermal equilibrium at the interface food-bulk ambient temperature. Precisely, latent heat effects of the evaporation on the food product are balanced with the air sensible heat at the air/product interface. Details about this calculation are here dismissed for being within the common general knowledge of the skilled person in the art.

For an embodiment, the storage quality variable is the shelf-life based time reduction, or elapsed shelf-life time, of the food product and said method comprises;

- performing and recording, with a given temporal frequency, a plurality of measurements of air ambient temperature, at which the specific food product is exposed during said pre-set time,
- calculating by means of an equation actual values of shelf-life based time reduction using the measured and recorded values of air ambient temperature,
- retrieving a desired value of shelf-life based time reduction, said desired value being calculated by means of the same equation using reference values of air ambient temperature, at which the specific food product should have been exposed under desired or optimal air ambient conditions and;
- obtaining a food storage quality shelf-life index to monitor the storage quality of said specific food product by relating at least one of said actual values of shelf-life based reduction time (elapsed shelf-life time at the measured air ambient temperature) with the desired or optimal value of the shelf-life based reduction time (elapsed shelf-life time at the reference value of air ambient temperature).

The shelf-life is a length of time that a perishable food product may be stored without becoming unfit for use, consumption, or sale. Perishable food products generally lose some shelf-life during the cold chain. When deviation from optimal or desired conditions take place, the shelf-life reduction is more severe. The claimed method has the advantage that allows to quantify the impact of the actual storage conditions in terms of reduction of shelf-life time of the food product relative to the expected nominal reduction of shelf-life time. In particular, the claimed method helps the retailer to effectively manage incidences on the display store cabinets by quantifying a relative elapsed shelf-life time that is helpful for taking decisions. This shelf-life index represents a support tool to evaluate the effect of temperature deviation from reference air ambient conditions concerning food product shelf-life.

According to the present invention, the food storage quality shelf-life index is expressed as a percentile (SLI) indicating proximity to the desired or optimal value of shelf-life based time reduction (elapsed shelf-life time) of the specific food product, and computed by the equation;

$$SLI = \frac{esl_{sp}}{esl_T} \cdot 100 \quad [5]$$

where;

$esl_{sp}$ is the desired elapsed shelf-life time value at the reference value of air ambient temperature,

$esl_T$ is the calculated elapsed shelf-life time values at the measured and recorded values of air ambient temperature.

The shelf-life index of a food product depends on the temperature and the time that the product is stored at such temperature. The shelf-life reduction due to microbial growth depends on the foods and it is described in several scientific publications, such as Food Safety Standards and handbooks; Doyle, J.P., 1989. Seafood shelf life as a function of temperature. Alaska Sea Gram No. 30. Marine Advisory Program, University of Alaska, Fairbanks Doyle, 1989; Food Code, 2013).

The values for the shelf-life index range from 100 points (when the value of elapsed shelf-life at the measured air ambient temperature is equal or shorter than the reference one, as the index is limited to 100 points) and tends to 0 points, for extremely adverse storage conditions. Hence, a value equal to 100 points represents reference air ambient conditions and 0 points extremely aging conditions, i.e. indicating instantaneous food product deterioration. It is important to mention that this index, as the previous one, is a real-time o near real-time index, hence the elapsed shelf-life time concept here refers to a short period of time, of the order of minutes (min), typical sampling frequency of monitoring systems.

According to the present invention, alternatively, the shelf-life index is expressed as a time multiplier (SLA) of the actual time the food product has been exposed to the measured and recorded values of air ambient temperature, and computed by the equation;

$$SLA = \frac{esl_T}{esl_{sp}} \cdot 1 \quad [6]$$

where;

$esl_{sp}$ is the desired elapsed shelf-life time value at the reference value of air ambient temperature,
$esl_T$ is the calculated elapsed shelf-life time values at the recorded measured values of air ambient temperature.

This time multiplier (SLA) represents the relative aging velocity at the actual air ambient conditions with respect to the reference air ambient conditions. In fact, this time multiplier defines the relative rate (or acceleration) of microbial growth, or the shelf-life deterioration/acceleration of the food product.

The values for the time multiplier (SLA) range from *1 x times* (when the actual air ambient conditions are at the reference air ambient temperature $T_{sp}$ or lower) and tends to *infinity x times,* for an extremely adverse aging/microbial growth conditions.

Advantageously, the claimed method comprises the step of computing the effective exposed time in terms of shelf-life base time reduction (i.e. the effective elapsed shelf-life time) using the food storage quality shelf-life index expressed as a time multiplier (SLA), had the food product being exposed to corresponding reference values of air ambient temperature.

When the time multiplier (SLA) takes values greater than *1 x times,* the indicator can be used as the multiplier of the actual storage time to compute the effective elapsed shelf-life time of the food product, had the food product been stored at reference temperature conditions. For example, a pork-loin stored 3 days with a shelf-life index expressed as a time multiplier *SLA = 3xtimes* will suffer the same microbial growth, and consequently the same shelf-life based time reduction, as the same pork-loin during SLA = 3 x 3 = 9 days at reference air ambient conditions.

According to the present invention, the calculated and desired values of elapsed shelf-life time are computed by the equations;

$$rsl = \left(a \cdot (T - T_{sp}) + 1\right)^b \quad [7]$$

$$esl = time_{sample} \cdot rsl \quad [8]$$

where;

$T$ are recorded and measured values of air ambient temperature at which the food product has been exposed,
$T_{sp}$ is the reference value of air ambient temperature under desired air ambient conditions,
$time_{sample}$ is the actual time at which the food product has been exposed to the recorded and measured values of air ambient temperature or to the reference value of air ambient temperature.
$a$ and $b$ are known coefficients, which depend on the specific food product, and are described in several scientific publications, for example; Spencer, R. and Baianes, C.R., 1964. The effect of temperature on the spoilage of wet white fish. I. Storage at constant temperatures between -1ºC and -25ºC. Food Technology, (18), 769; and Olley, J.; Ratkowsky D.A., 1973. Temperature Function Integration and Its importance in the storage and distribution of flesh foods above the freezing point. Journal of Food Technology in Australia 25(2):66-73.

*rsl* is the relative shelf-life based time reduction or relative elapsed shelf-life time,
*esl* is the elapsed shelf-life time.

Such exponential equation captures the microbial growth rate, which increases exponentially with increasing storage temperature. This fact causes a reduction of the relative shelf-life rsl at desired temperature Tsp when actual temperature conditions are defined by T, as defined in the scientific publications abovementioned.

Several scientific publications and handbooks describe the evolution of the shelf-life for food products following simple kinetic reaction approaches of the first order, typical for vitamin loss, oxidative colour loss or microbial growth. Such first-order quality functions are *log* or *ln* based.

According to a second aspect, the present invention relates to a system for monitoring storage quality of a specific food product during transport and/or storage comprising;

- at least one sensor configured and arranged for performing, with a given temporal frequency, a plurality of measurements of at least one air ambient parameter of the ambient at which the specific food product is exposed during a pre-set time; and
- computing means configured and arranged for;

  - receiving and recording measurement data coming from said at least one sensor,
  - calculating by means of an equation actual values of a storage quality variable indicative of a storage quality condition of the specific food product, using the measured and recorded data values coming from said at least one sensor, wherein said storage quality variable is a variable selected among at least one of water mass transfer rate indicative of water weight loss of the specific food product and shelf-life based time reduction indicative of microbial proliferation of the specific food product,
  - retrieving data representative of a desired or optimal value of said storage quality variable, wherein said desired or optimal values have been obtained by calculation with the said equation using reference values of the at least one air ambient parameter of the ambient at which the specific food product should have been exposed under desired or optimal air ambient conditions, and for;
  - processing the actual values of said storage quality variable according to the claimed method to obtain a food storage quality index to monitor the storage quality of the specific food product.

Preferably, said computing means comprise a wireless communication module adapted to receive signals representative of the measured and recorded data coming from said at least one sensor, and the system comprises at least one measuring unit including the at least one sensor and a wireless communication module adapted to transmit signals representative of the measured and recorded data of said at least one sensor to the computing means during a pre-set time.

The claimed system implements the claimed method and allows to quantify the impact of temperature-time and/or air ambient relative humidity on the food products and is able to provide full traceability in real time, or near real time, of the cold chain. The storage quality indexes represent a tool for comprehensively improving both the design and HACCP (Hazardous Analysis of Critical Control Points) processes for all the segments of the cold-chain.

It has been found that food retail stores and catering services are nowadays addressing their quality standards only on temperature monitoring, without any quantification of the impact of temperature-time and/or air ambient relative humidity on the food products. Moreover, it has been also found that the food retail industry presents an important lack of knowledge related to optimal refrigeration/storage conditions for specific products, while air ambient relative humidity is generally neglected. The claimed system provides knowledge related to the effects of variations with respect to the optimal conditions in two directions:

  Effects of the storage air ambient temperature and air ambient relative humidity (when different from optimal) on the drying/weight loss rate of fresh products, therefore, on its water content and related organoleptic and visual features, i.e. sensory characteristics, and
  Effects of the storage air ambient temperature and time on the growth of microorganisms in perishable products, therefore, on its microbiological quality, safety and general sensory characteristics.

Advantageously, the system comprises at least one measuring unit included in a detachable wireless connected device, preferably, a detachable wireless Narrow Band (NB) connected device. This device may be easily arranged on a refrigerator truck and/or on a display store cabinet to monitor one or more storage quality variables of the food products. This detachably device includes the at least one sensor and the wireless communication module adapted to transmit signals representative of the measuring data of said at least one sensor to the computing means during a pre-set time.

In the present invention;

Storage quality shall be understood to mean quality of the food product related to the storage air ambient conditions at which the food product is exposed during transport and/or storage.

Shelf-life shall be understood to be the length of time that a food product, preferably a perishable food product, may be stored without becoming unfit for use, consumption, or sale.

Cold chain shall be understood to be a temperature-controlled supply chain. Cold chain logistics includes all of the means used to ensure at least a constant temperature for a product that is not heat stable, from the time it is manufactured until the time it is used.

Optimal or desired air ambient conditions shall be understood to be air ambient conditions determined by reference air ambient parameters selected among at least one of air ambient temperature, air ambient relative humidity and optionally, air velocity of the ambient at which the food product is exposed. The values of these air ambient parameters depend on the specific food product and belong to common general knowledge of the skilled person in the art. For an embodiment, the values of these air ambient conditions are chosen by the food retailer or end-user and they depend on the shelf-life that is required on the application (i.e. depending on the total amount of time that the product is desired to be exposed before final consumption).

## Brief description of the drawings

In order to understand what has been presented above, we attach some figures which represent schematically and strictly for non-limiting purposes the results of several embodiments.

In said drawings;

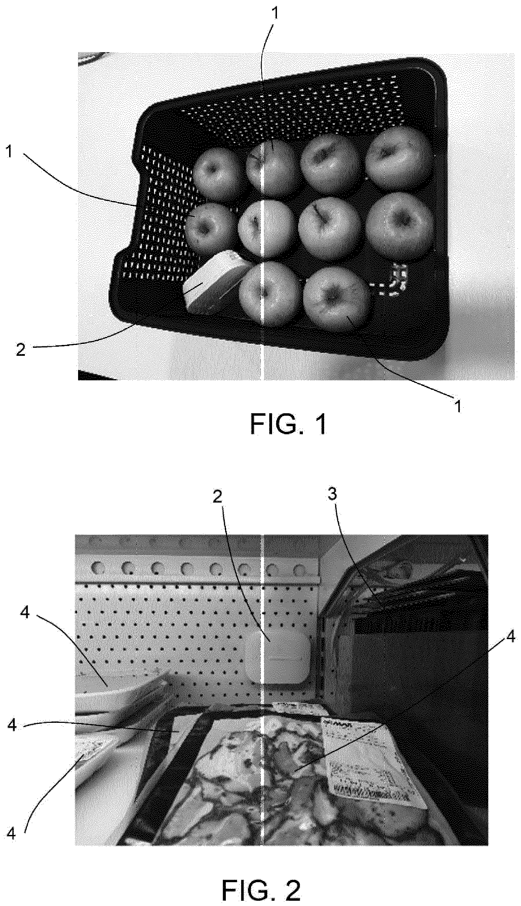

Figure 1 shows an upper perspective view of a box of apples 1 housing a measuring unit included in a detachable wireless connected device 2, preferably, a detachable wireless Narrow Band (NB) connected device. This connected device 2 is susceptible of measuring the air ambient conditions at which the apples 1 are exposed inside the box and susceptible of sending the measured values to the computing means that obtain the food storage quality index.

Figure 2 shows a perspective of a portion of an experimental refrigerated display cabinet 3 for chicken 4 housing a measuring unit included in a detachable wireless connected device 2, preferably, a detachable wireless Narrow Band (NB) connected device. This connected device 2 is susceptible of measuring the air ambient conditions at which the chicken 4 is exposed inside the cabinet and susceptible of sending the measured values to the computing means that obtain the food storage quality index.

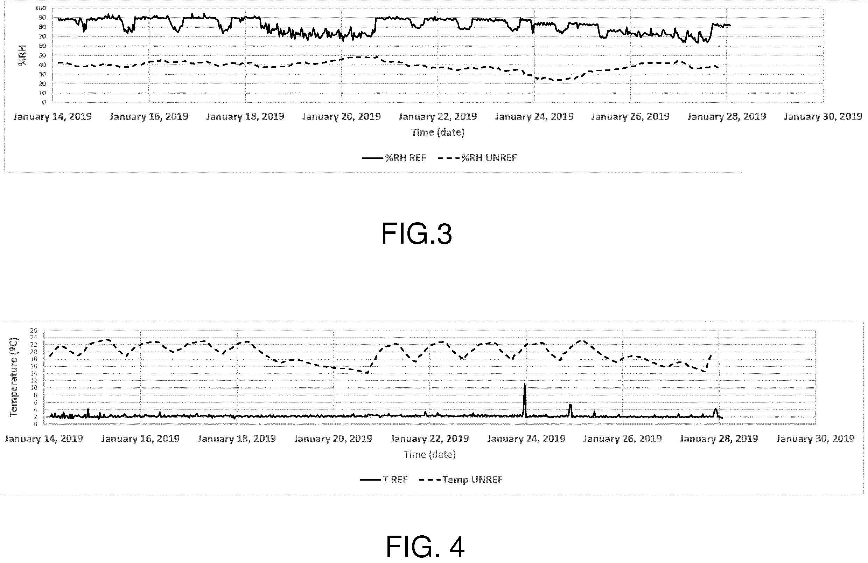

Figure 3 and 4 are graphic representations that show recorded and measured values of air temperature (T°C) and air relative humidity (%HR) for unrefrigerated (UNREF) and refrigerated (REF) apple groups during a pre-set time. The values were measured by means of a measuring unit included in the connected device 2 represented in figure 1.

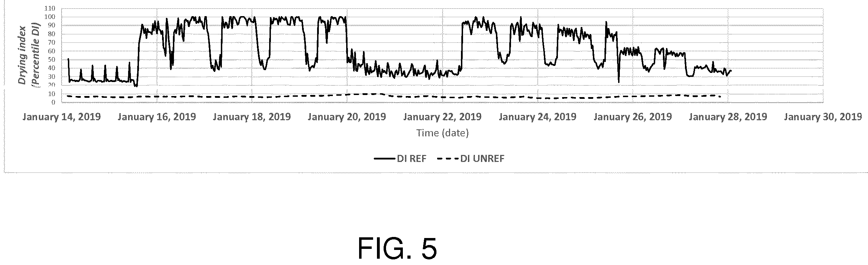

Figure 5 is a graphic representation that shows values of food storage quality drying index expressed as a percentile DI for unrefrigerated (UNREF) and refrigerated (REF) apple groups during the pre-set time of figure 3. These values have been obtained using the measured and recorded values of air ambient conditions represented on figures 3 and 4.

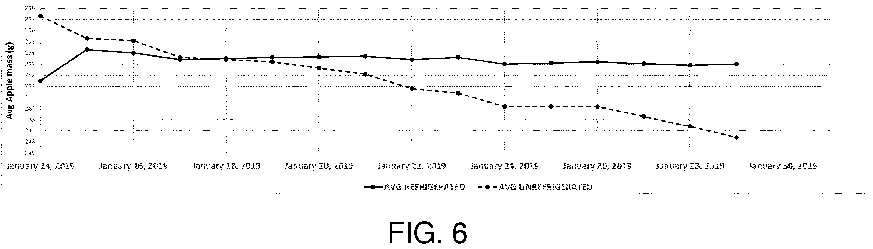

Figure 6 is a graphic representation that shows measured average weight loss experimental data due to drying effects for both refrigerated (REF) and unrefrigerated (UNREF) apple groups of figures 3 and 4.

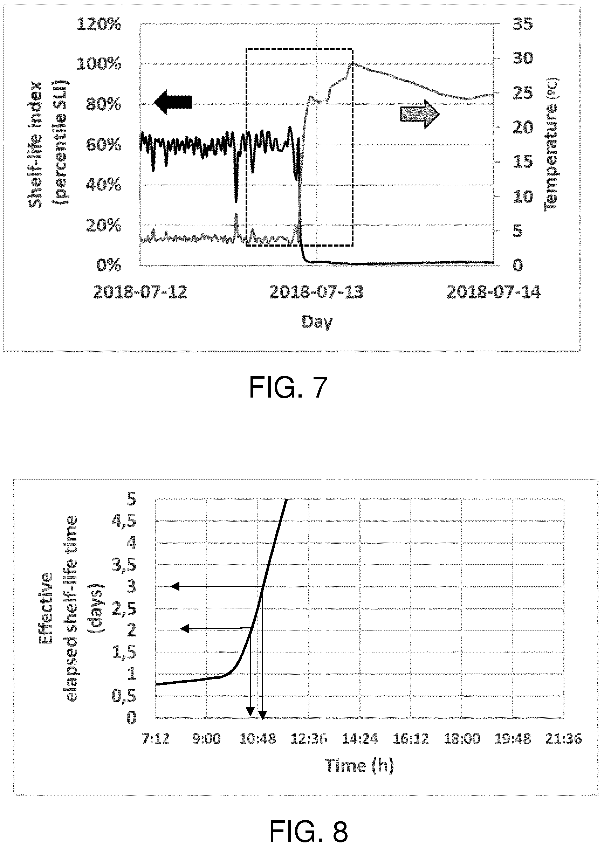

Figure 7 is a graphic representation showing values of the food storage quality shelf-life index (expressed as a percentile SLI) for the refrigerated chicken display 3 of figure 2 during a registered storage time wherein the chicken refrigerated display 3 had a technical problem. It also shows air temperature data measured at the same chicken refrigerated display 3 during the time of the incident and with the detachable wireless connecting device 2 of figure 2.

Figure 8 is a graphic representation showing evolution of values of effective elapsed shelf-life time of the chicken 4 after the incident of figure 7. This elapsed shelf-life time is obtained using the food storage quality shelf-life index expressed as a time multiplier SLA and registered time (h) after the incident.

## Description of examples

Below we present different examples of application of the claimed method and system for monitoring storage quality of food products, which must be interpreted to be an auxiliary tool for a better understanding of the invention and not as limitation of the object thereof.

Firstly, examples are described to demonstrate usefulness of the food storage quality drying index obtained with the claimed method and system. Secondly, examples are described to demonstrate usefulness of the food storage shelf-life index obtained with the same claimed method and system.

Storage quality drying index

It has been found that the cold chain generally neglects aspects related to relative humidity control, at least in its last phases, that negatively affect the water content of the product and, hence, its sensory characteristics and final weight. Moreover, it is often found that storage air ambient temperatures for fresh products (especially fruits, although not limited to) are not optimal for the specific food product, causing dehydration and reduction of mass and, consequently, potential economic losses (as the sold weight is smaller than the purchased weight). The claimed storage quality drying index is useful as it can help first, quantifying the severity of the weight loss with respect to optimal (minimal weight loss) conditions. Secondly, if the indicator show unacceptable dehydration for the food products, storage conditions can be improved, consequently improving sensory characteristics of the food products (enhancing its commercial value) and also weight, increasing the turnover of the food retailer.

Below it follows some practical examples of application of the claimed method and monitoring system that obtains the storage quality drying index.

In the examples below desired or optimal values of water mass transfer rate for specific food products were computed by using reference air ambient parameters at which the specific food product should have been exposed under optimal or desired air ambient conditions. The optimal or desired air ambient conditions for each specific food product are data known in the prior art. Calculation of the actual and desired, or optimal, water mass transfer rate was carried out by the computing means of the system using equations previously described (see, equations [1], [2], [3], [4]).

**Example 1.** A practical calculation case of values of the storage quality drying index for Broccoli (*Brassica sp),* a food vegetal product, expressed as a percentile (DI) and as a time multiplier (DA). See tables below.

Table 1.- Reference values of air ambient temperature and air relative humidity at which the Broccoli should have been exposed in a cold room under desired or optimal end-user air ambient conditions.

| Temperature | Relative humidity |
|---|---|
| 2 $\underline{o}$C | 90 % |

Table 2.- Measured and recorded values of air ambient temperature (T) and air relative humidity (RH) at which the Broccoli was actually exposed during a pre-set time, and computation of actual values of water mass transfer rate under air natural convection conditions ($mt_{natural}$) and under air forced convection conditions ($mt_{forced}$).

| Time | T | %RH | Rayliegh | Sh (natural) | h_m (natural) | mt (natural) | Reynolds | Sh (forced) | h_m (forced) | mt (forced) |
|---|---|---|---|---|---|---|---|---|---|---|
| | $\underline{o}$C | | (-) | (-) | (m/s) | (Kg / m2 s) | (-) | (-) | (m/s) | (Kg / m2 s) |
| 12:00 | 2.39 | 34.8 | 7825.423 | 2.53946 | 0.00222 | 2.97E-06 | 3810.131 | 34.5814 | 0.03022 | 4.04E-05 |
| 12:15 | 1.00 | 32.0 | 7824.597 | 2.53939 | 0.0022 | 2.86E-06 | 3844.639 | 34.7298 | 0.0301 | 3.91E-05 |
| 12:30 | 2.35 | 34.7 | 7827.362 | 2.53961 | 0.00222 | 2.96E-06 | 3811.178 | 34.5859 | 0.03022 | 4.04E-05 |
| 12:45 | 4.59 | 39.2 | 7752.939 | 2.53356 | 0.00224 | 3.11E-06 | 3755.936 | 34.3474 | 0.03042 | 4.22E-05 |
| 13:00 | 4.65 | 39.3 | 7749.761 | 2.5333 | 0.00224 | 3.12E-06 | 3754.349 | 34.3405 | 0.03042 | 4.23E-05 |
| 13:15 | 2.45 | 34.9 | 7824.448 | 2.53938 | 0.00222 | 2.97E-06 | 3808.558 | 34.5746 | 0.03023 | 4.05E-05 |
| 13:30 | 1.00 | 32.0 | 7825.026 | 2.53942 | 0.0022 | 2.86E-06 | 3844.596 | 34.7296 | 0.0301 | 3.91E-05 |
| 13:45 | 2.29 | 34.6 | 7826.618 | 2.53955 | 0.00222 | 2.96E-06 | 3812.714 | 34.5925 | 0.03021 | 4.03E-05 |
| 14:00 | 4.55 | 39.1 | 7756.716 | 2.53386 | 0.00224 | 3.11E-06 | 3756.957 | 34.3518 | 0.03041 | 4.22E-05 |
| 14:15 | 4.69 | 39.4 | 7748.933 | 2.53323 | 0.00224 | 3.12E-06 | 3753.462 | 34.3367 | 0.03043 | 4.23E-05 |
| 14:30 | 2.52 | 35.0 | 7823.538 | 2.5393 | 0.00222 | 2.98E-06 | 3806.971 | 34.5678 | 0.03023 | 4.05E-05 |
| 14:45 | 1.01 | 32.0 | 7825.968 | 2.5395 | 0.0022 | 2.86E-06 | 3844.501 | 34.7292 | 0.0301 | 3.91E-05 |
| 15:00 | 2.22 | 34.4 | 7827.845 | 2.53965 | 0.00222 | 2.95E-06 | 3814.243 | 34.5991 | 0.03021 | 4.03E-05 |
| 15:15 | 4.50 | 39.0 | 7758.154 | 2.53398 | 0.00224 | 3.11E-06 | 3758.005 | 34.3564 | 0.03041 | 4.22E-05 |
| 15:30 | 4.72 | 39.4 | 7745.742 | 2.53297 | 0.00224 | 3.12E-06 | 3752.606 | 34.333 | 0.03043 | 4.23E-05 |

Table 3.- Computation of the Broccoli storage quality drying index, expressed as a percentile DI or as a time multiplier DA, by relating the actual values of water mass transfer rate ($mt_a$) with a desired value of water mass transfer rate ($mt_0$).

| Actual value of $mt_a$ | Desired value of $mt_0$ | DI (%) | DA (x) |
|---|---|---|---|
| (Kg / m2 s) | (Kg / m2 s) | | |
| 2.169E-05 | 3.07E-06 | 14% | 7.1 |
| 2.097E-05 | 3.07E-06 | 15% | 6.8 |
| 2.167E-05 | 3.07E-06 | 14% | 7.1 |
| 2.267E-05 | 3.07E-06 | 14% | 7.4 |
| 2.269E-05 | 3.07E-06 | 14% | 7.4 |
| 2.172E-05 | 3.07E-06 | 14% | 7.1 |
| 2.097E-05 | 3.07E-06 | 15% | 6.8 |
| 2.164E-05 | 3.07E-06 | 14% | 7.1 |
| 2.265E-05 | 3.07E-06 | 14% | 7.4 |
| 2.27E-05 | 3.07E-06 | 14% | 7.4 |
| 2.175E-05 | 3.07E-06 | 14% | 7.1 |
| 2.097E-05 | 3.07E-06 | 15% | 6.8 |
| 2.161E-05 | 3.07E-06 | 14% | 7.0 |
| 2.263E-05 | 3.07E-06 | 14% | 7.4 |
| 2.272E-05 | 3.07E-06 | 13% | 7.4 |

The measured values of the air ambient conditions of the cold room were in general slightly above optimal air ambient temperature and present a low air relative humidity causing a poor percentile of the drying index DI close to 14 points corresponding to a time multiplier DA of 7 which means that every day that the Broccoli is in the cold room the weight loss is equivalent to 7 days in optimal air ambient conditions. For this embodiment water mass transfer from Broccoli to bulk ambient have been computed under the assumption that the fractions of exposed time under air natural and forced convection are 0.5 each.

**Example 2.** Description of an apple storage test, with reference to figures 1 to 5.

Twenty apples were purchased from a food retailer, avoiding samples at store display, the apples were taken directly from the food retailer cold rooms. Apples were put into two groups of ten apples each: refrigerated and unrefrigerated.

The unrefrigerated group was kept at room temperature/air ambient relative humidity for seventeen days, while the refrigerated group was kept inside a cold-room under controlled air temperature and air relative humidity for the same exact period of time.

A wireless Narrow Band (NB) connected device 2 was used to monitor both air relative humidity and air ambient temperature, as seen in Figure 1 for the unrefrigerated group.

Figures 3 and 4 represent data of air temperature and air ambient relative humidity for both groups, refrigerated and unrefrigerated. As can be seen in Figure 3, the refrigerated group could not always reach optimal air ambient relative humidity set-point, as apples optimal air ambient conditions are between 0ºC - 2ºC of air ambient temperature and between 90- 98% of air relative humidity (Thompson, J., A. Kader, and K. Sylva, 1996. Compatibility chart for fruits and vegetables in short-term transport or storage. Oakland: Univ. Calif. Div. Ag. & Nat. Res. Publ. 21560). Nevertheless, both actual air ambient temperature and air relative humidity were much closer to optimal conditions with respect the unrefrigerated group. The unrefrigerated group suffered low and very low air ambient relative humidity values (ranging from 20% to 50%).

Figure 5 shows the corresponding drying index expressed as a percentile DI for both groups refrigerated and unrefrigerated apples. It has been found that the refrigerated group, despite not reaching a drying index of 100 points during all time, is related to a much higher drying index. Moreover, it is interesting to see how, during weekends and nights (as the humidifier was not working) the drying index dropped from values around 90-100 points to values around 40-50 points due to inappropriate air ambient relative humidity.

Table 4 below displays the average numbers for the drying index expressed as a percentile DI and as time multiplier DA, during 2 weeks. It also displays the average weight at day 2 and day 16 of the storage test and the average percentage of average measured experimental weight loss for the two groups of apple refrigerated REF and unrefrigerated UNREF. The evolution of the data are also represented in figure 6.

**Table 4.** Food storage quality drying index and experimental apple weight loss

| Apples | DI | DA | Day 2 avg. weight (g) | Day 16 avg. weight (g) | Weight loss (%) | $DA_{UNREF}$ / $DA_{REF}$ | (Weight-loss)$_{UNREF}$/ (Weight-loss)$_{REF}$ |
|---|---|---|---|---|---|---|---|
| REF | 58.62 | 1.71 | 255.3 | 253.1 | 0.5% | 8.37 | 8.31 |
| UNREF | 6.99 | 14.31 | 255.4 | 246.4 | 4.2% | | |

Table 4 shows a remarkable weight loss for the unrefrigerated set of apples, losing 4.2% of mass in two weeks (from day 2 to day 16). On the other hand, the refrigerated group of apples only loses 0.5% of the total mass at day 16. Hence, the unrefrigerated group lost, in the same period of time, around 8.31 times the relative mass lost by the refrigerated one.

It must be underlined that the relationship of the drying indexes expressed as a time multiplier DA for both groups of apples perfectly agrees (8.37) with the experimental number of (8.31), showing how the drying index expressed as a time multiplier DA is capable of measuring the relative rate (or acceleration) of mass transfer due to storage conditions. Equivalently, the ratio between indexes indicates the relative weight loss between the two groups during the same storage time. Finally, it has to be pointed out that the reference weight for this analysis was the mass recorded at the second day (day 2 of the test), as the refrigerated group increased its mass due to an unexpected rehydration process once stored under controlled air ambient relative humidity.

**Example 3.** Description of a practical case for monitoring storage quality of fruits, in particular apples, with the food storage quality drying index DI.

A food retailer company is very concerned about the food waste related to apples in their supermarkets. The food retailer company buys every month around 1500 kg of apples, wasting approximately 200 kg (in pieces that cannot be sold) and invoicing only 1200 kg per month. Food retailer understands that the supermarket selling process involves around 100 kg of apples weight loss (wasted apples + invoiced apples = 1400 kg < 1500 kg), despite big efforts are made to keep apples as long as possible in supermarket cold rooms.

By measuring and recording air ambient temperature and air ambient relative humidity of the ambient air of cold rooms and display store cabinets, and by applying the claimed method, a drying index is computed in real time for each sample of time during a pre-set time. The average of drying index values expressed as percentile DI of the optimal weight loss conditions for the apples, allows the food retailer to quantify that;

- Cold rooms are slightly above optimal temperature and present a very low air ambient relative humidity causing a poor percentile of the drying index (25 points) corresponding to a time multiplier DA of 4 (which means that every day that the apple is in the cold room the weight loss is equivalent to 4 days in optimal/desired air ambient conditions).
- Apples at display cabinet present a percentile value DI of the drying index of 9 points which corresponds to a time multiplier DA of 11.1 (showing a very strong acceleration of weight loss).
- The average time at display for apples (an actual exposed time of 8h) is equivalent to the weight loss of DA x times = 11.1 x 8 = 3.7 days under optimal/desired air ambient conditions (corresponding to an effective exposed time of 3.7 day at the display cabinets, had the apples being exposed to the optimal/desired air ambient conditions).

Actions taken

In view of the information provided by the claimed method and system, the food retailer decides to reach at least a percentile DI of the drying index equal to 80 points in the cold room, and at least a percentile DI equal to 50 points at the display cabinets, while reducing the time at display cabinets from 8 h to maximum 4h.

To achieve the targeted indicators, an air temperature and an air relative humidity adjustment of the ambient of the cold rooms (by using humidifiers) is done in supermarket. Humidifiers are installed at apples display cabinets while keeping air room temperature. With these changes, a high increase of the drying index expressed as a percentile DI is obtained (79 points and 58 points, respectively).

The implementation of the claimed method and system allows to reduce the total weight loss to 21 kg, as less apples are left unsold (only 100 kg, as per sensory characteristics improvement) and the invoiced apples raise to 1379 kg (as the sold apples average higher weight each). Total savings are then quantified as 79 kg per month, and the final apple waste is reduced from 6.6% to 1.4%.

**Example 4.** Description of a practical case for monitoring storage quality of vegetables with the drying index DI.

A food retailer company decides to increase the freshness of the purchased vegetables by monitoring their drying conditions along the cold chain, in collaboration with the producer.

Inside the delivery boxes, a wireless NB connected device similar to the one show in figure 1 is installed. The device registers air ambient temperature and air ambient relative humidity while allowing to compute the food storage quality drying index. Each delivery shows the air temperature profile of the vegetables from expedition at the farm, until reaching the supermarket. From computation of the average drying indexes all along the cold chain, both retailer and producer detect some short periods with high dehydration conditions.

It is found that during two transports, which average an actual exposed time of 0.6 days, the average value of the drying index expressed as a percentile equals DI = 30 points and DA = 3.33 days expressed as a time multiplier. Hence, the effective exposed time in terms of water weight loss is computed as equal to 2 days of dehydration at optimal air ambient conditions; DA x time = 3.33 x 0.6 = 1.99 ≈ 2 days, underlying weight loss that affects the producer, the retailer and the final consumer.

Actions taken

The drying Index DI is set as target indicator to equal at least 60 points.

Due to the difficulty related to installing humidifiers in transport trucks, both producer and retailer agree on reducing air ambient temperature of the transport to 1ºC (from 9ºC that were set originally) obtaining a sufficient drying index that equals a percentile of 60 points and allows to reach much fresher products (with approximately half weight loss) at the stores for a similar period.

**Example 5.** Description of a practical case for monitoring storage quality of vegetables; in particular spinach (*Spinacea oleracea*) and pumpkin (*Cucurbita sp.*) together, using the food storage quality drying index DI.

A wholesaler company is dealing with different types of vegetables in the same cold chamber. Among the vegetables, spinach is the one with the greatest economic importance. Spinach also has the highest metabolic activity among the leafy vegetables. Its post-harvest life hardly exceeds 12 days due mainly to the dehydration, which involves yellowing, changes in taste, changes in composition and diseases. The reference storage air ambient conditions of spinach are 0 ºC for air ambient temperature and 95 % for air relative humidity. Its maximum admissible weight loss is considered to be 3-5 %. From time to time, pumpkin is stored in the same cold chamber, with a minimum desired air ambient temperature of 7 ºC and a maximum desired air relative humidity of 75 %.

The company would like to determine the best ambient conditions for the spinach, but such that these conditions are also valid for pumpkins. Therefore, the wholesaler company wants to know how storing at the same time pumpkin and spinach together in the chamber may affect the shelf-life of spinach.

The spinach storage quality drying index under optimal air ambient conditions for pumpkin (7ºC, 75%RH) returns a poor drying index expressed as a percentile DI that equals 13.5 points and a time multiplier DA = *7.42 x times.* Under those conditions, in a couple of days spinach has dehydrated an equivalent of 15 days at optimal air ambient conditions; DA x time = 7.42 x 2 = 14.84 ≈ 15 days (i.e. an effective exposed time of 15 days, had the spinach being exposed to the optimal air ambient conditions).

On the other hand, drying index for pumpkin at spinach conditions is at condensation risk, since effective transpiration is almost 10 times smaller than desired.

Actions taken

The wholesaler company opts to set storage conditions at 4ºC, 85% RH obtaining the following results of the drying index (see Table 5 below).

**Table 5.** Results of storage quality drying index for spinach and pumpkin at pre-set air ambient storage conditions.

| Storage air ambient conditions 4ºC, 85% | Drying index as a percentile DI | Drying index as time multiplier DA |
|---|---|---|
| Spinach | 27 points | 3.8xtimes |

(continued)

| Storage air ambient conditions 4oC, 85% | Drying index as a percentile DI | Drying index as time multiplier DA |
|---|---|---|
| Pumpkin | 100 points and no condensing risk | 1xtimes |

The pre-set storage air ambient conditions (4oC, 85%) compromises the spinach, as the effective exposed time in terms of water mass transfer/weight loss, had the product being exposed to the optimal/desired air ambient conditions, is still of around 4 times longer than desired, although the pumpkin is already very close to be under condensing risk (i.e. its actual transpiration at the selected temperatures and air ambient relative humidity is 50% of the transpiration it would have under specific pumpkin optimal/desired conditions).

The compromise is finally adopted with air ambient conditions of 4oC, 85% RH, as long as spinach has a turnover time of less than 3 days. Under those conditions, in 3 days spinach are expected to dehydrated an equivalent of 11.4 days at optimal/desired air ambient conditions, obtained by using the time multiplier DA x times = 3.8 x 3 days = 11.4 days. This period of time is an effective exposed time in terms of water mass transfer/weight loss that is within the expected 12 days of post-harvest life of spinach.

Storage quality shelf-life index

The cold chain aims to maintain food products under refrigeration for maximization of shelf-life, including organoleptic aspects (sensory characteristics) and other quality traits (e.g. microbial loads). Adequate storage air ambient temperatures are set by producers depending on the shelf-life that is expected for the product and the technological feasibility of the given temperature at different steps of the cold chain.

Generally, when temperatures are different from the desired ones (due to expected or unexpected events, such as cold-room traffic or refrigeration system malfunction) the quantification of the effects of such temperature excursion on food products are difficult to be quantitatively assessed by end-users. The shelf-life index expressed as a percentile SLI and as a time multiplier SLA represent a support tool to evaluate the effect of temperature deviation from reference conditions concerning food product shelf-life.

Below it follows some practical examples of application of the claimed method and monitoring system by using the storage quality shelf-life index.

In the examples below desired or optimal values of elapsed shelf-life (shelf-life based reduction time due to microbial growth) for specific food products were computed by using air ambient parameters at which the specific food product should be exposed under end-user desired air ambient conditions. The end-user air ambient conditions for each specific food product are chosen by the food retailer or end-user and they depend on the shelf-life that is required on the application (i.e. depending on the total amount of time that the product is desired to be exposed before final consumption). Calculation of the actual and desired elapsed shelf-life time was carried out by computing means using the equations previously described (see, equations [5], [6], [7], [8]).

**Example 6.** A practical calculation case of values of the storage quality shelf-life index for Pork meat (a food meat product), expressed as a percentile (SLI) and as a time multiplier (SLA). See tables below.

Table 6.- Reference value of air ambient temperature at which the Pork meat should have been exposed in a cold room under desired end-user air ambient conditions, and known recorded coefficients a and b for computation.

| Temperature | Coefficient a | Coefficient b |
|---|---|---|
| 3 oC | 0.00051937 | 283.2255002 |

Table 7.- Measured and recorded actual values of air ambient temperature (T) at which the Pork meat is exposed during a pre-set time (12 h), and computation of the food storage quality shelf-life index, expressed as a percentile SLI or as a time multiplier SLA, by relating actual values of shelf-life base time reduction (elapsed shelf-life time $esl_T$ at the measured values of air ambient temperature) and the expected/desired shelf-life base time reduction ($esl_{sp}$ elapsed shelf-life time at the reference value of air ambient temperature).

| Time | Actual T | Reference Tsp | esl_SP | esl_T | SLI | SLA |
|---|---|---|---|---|---|---|
| | oC | oC | min | min | % | |
| 12:00 | 2.39 | 3 | 15.000 | 13.71323394 | 100.00 | 1.000 |

(continued)

| Time | Actual T | Reference Tsp | esl_SP | esl_T | SLI | SLA |
|------|----------|---------------|--------|-------|-----|-----|
| | $_{o}C$ | $_{o}C$ | min | min | % | |
| 12:15 | 1.00 | 3 | 15.000 | 11.17542719 | 100.00 | 1.000 |
| 12:30 | 2.35 | 3 | 15.000 | 13.62880545 | 100.00 | 1.000 |
| 12:45 | 4.59 | 3 | 15.000 | 18.94779345 | 79.16 | 1.263 |
| 13:00 | 4.65 | 3 | 15.000 | 19.12883896 | 78.42 | 1.275 |
| 13:15 | 2.45 | 3 | 15.000 | 13.84203911 | 100.00 | 1.000 |
| 13:30 | 1.00 | 3 | 15.000 | 11.17844693 | 100.00 | 1.000 |
| 13:45 | 2.29 | 3 | 15.000 | 13.50427676 | 100.00 | 1.000 |
| 14:00 | 4.55 | 3 | 15.000 | 18.83347322 | 79.65 | 1.256 |
| 14:15 | 4.69 | 3 | 15.000 | 19.2314848 | 78.00 | 1.282 |
| 14:30 | 2.52 | 3 | 15.000 | 13.97328608 | 100.00 | 1.000 |
| 14:45 | 1.01 | 3 | 15.000 | 11.18509063 | 100.00 | 1.000 |
| 15:00 | 2.22 | 3 | 15.000 | 13.38243014 | 100.00 | 1.000 |
| 15:15 | 4.50 | 3 | 15.000 | 18.71515132 | 80.15 | 1.248 |
| 15:30 | 4.72 | 3 | 15.000 | 19.32939193 | 77.60 | 1.289 |
| 15:45 | 2.58 | 3 | 15.000 | 14.10687452 | 100.00 | 1.000 |
| 16:00 | 1.01 | 3 | 15.000 | 11.1953574 | 100.00 | 1.000 |
| 16:15 | 2.16 | 3 | 15.000 | 13.2633459 | 100.00 | 1.000 |
| 16:30 | 4.46 | 3 | 15.000 | 18.59304074 | 80.68 | 1.240 |
| 16:45 | 4.76 | 3 | 15.000 | 19.4223742 | 77.23 | 1.295 |
| 17:00 | 2.65 | 3 | 15.000 | 14.24269837 | 100.00 | 1.000 |
| 17:15 | 1.02 | 3 | 15.000 | 11.20924585 | 100.00 | 1.000 |
| 17:30 | 2.10 | 3 | 15.000 | 13.1470993 | 100.00 | 1.000 |
| 17:45 | 4.41 | 3 | 15.000 | 18.46735833 | 81.22 | 1.231 |
| 18:00 | 4.79 | 3 | 15.000 | 19.51025307 | 76.88 | 1.301 |
| 18:15 | 2.71 | 3 | 15.000 | 14.38064569 | 100.00 | 1.000 |
| 18:30 | 1.03 | 3 | 15.000 | 11.22675406 | 100.00 | 1.000 |

**Continuation of Table 7.-** Measured and recorded actual values of air ambient temperature (T) at which the Pork meat is exposed during a selected pre-set time (12 h), and computation of the food storage quality shelf-life index, expressed as a percentile SLI or as a time multiplier SLA, by relating actual values of shelf-life base time reduction (elapsed shelf-life time $esl_T$ at the measured values of air ambient temperature) and the expected/desired shelf-life base time reduction ($esl_{sp}$ elapsed shelf-life time at the reference value of air ambient temperature).

| Time | Actual T | Reference Tsp | esl_SP | esl_T | SLI | SLA |
|------|----------|---------------|--------|-------|-----|-----|
| | $_{o}C$ | $_{o}C$ | min | min | % | |
| 18:45 | 1.50 | 3 | 15.000 | 12.02894415 | 100.00 | 1.000 |
| 19:00 | 2.00 | 3 | 15.000 | 12.9476334 | 100.00 | 1.000 |
| 19:15 | 2.50 | 3 | 15.000 | 13.93621944 | 100.00 | 1.000 |
| 19:30 | 3.00 | 3 | 15.000 | 15 | 100.00 | 1.000 |
| 19:45 | 4.00 | 3 | 15.000 | 17.37636555 | 86.32 | 1.158 |
| 20:00 | 5.00 | 3 | 15.000 | 20.12766912 | 74.52 | 1.342 |

(continued)

| Time | Actual T | Reference Tsp | esl_SP | esl_T | SLI | SLA |
|------|----------|---------------|--------|-------|-----|-----|
| | $\underline{o}$C | $\underline{o}$C | min | min | % | |
| 20:15 | 6.00 | 3 | 15.000 | 23.31282554 | 64.34 | 1.554 |
| 20:30 | 7.00 | 3 | 15.000 | 26.99996906 | 55.56 | 1.800 |
| 20:45 | 2.85 | 3 | 15.000 | 14.66243308 | 100.00 | 1.000 |
| 21:00 | 1.06 | 3 | 15.000 | 11.27261919 | 100.00 | 1.000 |
| 21:15 | 1.93 | 3 | 15.000 | 12.81606523 | 100.00 | 1.000 |
| 21:30 | 4.27 | 3 | 15.000 | 18.07109266 | 83.01 | 1.205 |
| 21:45 | 4.87 | 3 | 15.000 | 19.74161075 | 75.98 | 1.316 |
| 22:00 | 2.91 | 3 | 15.000 | 14.80601915 | 100.00 | 1.000 |
| 22:15 | 1.08 | 3 | 15.000 | 11.30096925 | 100.00 | 1.000 |
| 22:30 | 1.88 | 3 | 15.000 | 12.71182614 | 100.00 | 1.000 |
| 22:45 | 4.21 | 3 | 15.000 | 17.93334559 | 83.64 | 1.196 |
| 23:00 | 4.89 | 3 | 15.000 | 19.80746393 | 75.73 | 1.320 |
| 23:15 | 2.98 | 3 | 15.000 | 14.95122062 | 100.00 | 1.000 |
| 23:30 | 1.10 | 3 | 15.000 | 11.33292523 | 100.00 | 1.000 |
| 23:45 | 1.82 | 3 | 15.000 | 12.61073089 | 100.00 | 1.000 |
| 0:00 | 4.16 | 3 | 15.000 | 17.79314591 | 84.30 | 1.186 |

The value of esl_SP corresponds to the actual elapsed shelf-life time of the food product when T = $T_{sp}$ and the term *rsl* of equations [7] and [8] equals 1.

The monitoring of the shelf-life index point out that the average 12 h that the meat product stay in the cold room produces and effective exposed time at 3$\underline{o}$C of 13.5 h, as the average shelf-life index expressed as a percentile SLI equals 90.96 points and the average shelf-life index expressed as a time multiplier SLA equals 1.1216 x times (the effective exposed time at 3$\underline{o}$C being calculated by 1.1216 x 12 h = 13.5 h).

It must be noted that the result of applying the equations on the average measured temperature does not produce the same indexes. This fact demonstrates that the computations must be applied in a quasi-continuum approach (one calculus per temperature sample) as per this methodology the aggregated reduction of the shelf-life is not positively compensated by lower temperatures that may take place and that would compensate the average measured temperature and consequently, the average indexes.

**Example 7.** Description of a practical case for monitoring storage quality of meat, in particular poultry in a refrigerated display cabinet, with references to figures 2, 6 and 7.

An application of the shelf-life index for microbial growth analysis is presented in this section. A wireless NB connected device 2 was installed in a refrigerated display cabinet 3 for poultry 4 in a supermarket, as shown in Figure 2. Air ambient temperature and obtained storage quality shelf-life index expressed as percentile SLI are represented in Figure 7.

The food retailer expected the refrigerated display cabinet 3 to be at 4$\underline{o}$C (and consequently the products inside the cabinet at 4$\underline{o}$C), expecting at least 3 days (from July 12th to July 14th) of shelf-life in the supermarket. This is consistent with an expected/desired 5 days shelf-life for chicken at 4 $\underline{o}$C (W. F. Stoecker, 1998. Industrial Refrigeration Handbook. Chapter 17: THE REFRIGERATION AND FREEZING OF FOOD, McGraw-Hill Professional, 17-1, 17-59) assuming the product has lost some shelf-life in previous steps of the cold chain.

Until day July 13th the average shelf-life index expressed as a percentile SLI was 95%, which corresponds to a slight time multiplier SLA = 1.05 x times meaning acceleration aging took place. As represented in Figures 7 and 8, on July 13th the refrigerated display cabinet 3 had a technical problem (defrost did not disconnect) around 9:30 AM, rapidly rising its temperature.

From inspection of the effective elapsed shelf-life time after the incident displayed in Figure 8 - it is seen that around 11:00 AM the aging of the product reached 2 effective exposed/storage days since the incident, while at 12:00PM it reached the maximum allowed by the food retailer (3 days at 4$\underline{o}$C).

Due to alarms triggered by the NB connected device 2, the supermarket was rapidly notified about the cold chain break and the storage quality shelf-life index expressed as a time multiplier SLA provided valuable information for the decision-making, considering the potential risk signalled and quantified by the system.

**Example 8.** Description of a practical case for monitoring storage quality of meat, in particular pork in a refrigerated display cabinet, using the shelf-life index.

A food-retailer sales pork loin in a refrigerated display cabinet. The loins are packed and refrigerated at 4ºC in the display (air ambient temperature of reference). The food-retailer expects the product to be sold within maximum 4 days (with expiration dates on the packing labelled between 5 and 7 days.

The refrigerated display is accidentally disconnected during the night of Tuesday, ranging from 4ºC (at beginning of the incident at 4:00am) to 12ºC (at 8:00am on Wednesday morning). The supermarket personnel, without further information, would have addressed the issue by throwing the pork loins away, as they have been 4 hours at out of thermal control.

However, by monitoring and calculation of the shelf-life index it is found that the shelf-life index expressed as a percentile equals 100 points at the beginning of the incident (4am), while it reaches 30 points at 8am in the morning. The shelf-life index expressed as a time multiplier SLA ranges from 1xtimes (4am) to 3.23xtimes (8am). Additionally, the time average shelf-life index expressed as a time multiplier SLA for the period of the incident is 1.88xtimes, as the heating-up curve is not linear. The effective exposed/storage (or effective elapsed shelf-life time since the incident) is then easily computed by the system; SLA x times = 1.88 x 4h = 7.52 h equivalent hours at 4ºC (i.e. 0.3 days corresponding to the computed effective exposed time in terms of shelf-life base time reduction had the product being exposed to the air ambient temperature of 4ºC).

Actions taken

The pork loins, from the perspective of the elapsed shelf-life time due to microbial growth, have evolved as if they had been kept at 4ºC for 0.3 days instead of the 0.16 days (4h) that were foreseen. The food-retailer then decides to keep the product on the display cabinet, as the expiration date of the products allows an additional 0.13 days deviation.

**Example 9.** Description of a practical case for monitoring storage quality of meat at a meat processing industry, using the shelf-life index.

A meat processing industry keep receiving claims (from food-retailers) about the aspect and spoilage of the products that are close to the expiration date. The set-point of the cold-room of the meat industry is properly adjusted at a reference air ambient temperature of 1ºC. The temperature records show a rise in the temperature between 4ºC and 6ºC several hours per day associated with the cold-room traffic, i.e. workers entering the cold-room to locate/remove products. The meat industry quality staff wonder if such temperature deviation could be the cause of the shelf-life shortening reported by food retailers.

The monitoring of the shelf-life index points out that the average 24 h that the products stay at the cold-room of the industry produce an effective exposed/stored time or effective elapsed shelf-life (at 1ºC) of 48 h, as the average shelf-life index expressed as a percentile SLI equals 49 points and the average shelf-life index expressed as a time multiplier SLA equals 2xtimes. These values mean that for each period (e.g. 24 h) the product is kept at the producer facilities, the effective exposed time is twice (e.g. 48 h) the elapsed shelf-life time at the reference air ambient temperature (1ºC). This finding could explain the premature spoilage detected by the food-retailer.

Actions taken

The meat producer decides to relocate the products far from the cold-room entry while reducing the expiration date in 24h, as a safe approach.

**Example 10.** Description of a practical case for monitoring storage quality of food products at a restaurant cold room, using the shelf-life index.

A restaurant cold room is parameterized with alarms based on the shelf-life index expressed as a percentile SLI. For values of SLI shorter than 90 points for more than 2h, an alarm is sent to the restaurant manager.

The restaurant manager has precisely established the limit of SLI because due to cold-room traffic, doors might be left open or inappropriately closed. While setting alarms at a given high temperature would cause an unbearable traffic of alarms (since the traffic generates short peaks of high temperatures in the cold room) the alarm set on the shelf-life index SLI produces effective alarms indicating shelf-life base time reduction and, hence, requiring of immediate action.

Although specific examples of the present invention have been described and represented, it is evident that a person skilled in the art may introduce changes and modifications, or replace the details with technically equivalent ones, without departing from the scope of the invention as it is defined in the attached claims.

## Claims

1.   A computer implemented method for monitoring storage quality of a specific food product during transport and/or storage comprising;

- performing and recording, with a given temporal frequency, a plurality of measurements of at least one air ambient parameter of the ambient at which the specific food product is exposed during a pre-set time of at least two segments of the cold chain of said specific food product, including two or more of the following: production, processing, transport, food-retail, and food-service,
- calculating by means of an equation actual values of a storage quality variable indicative of a storage quality condition of the specific food product, using said measured and recorded values of the at least one air ambient parameter,
- retrieving a desired or optimal value of said storage quality variable for the specific food product, said desired value being calculated by means of the same equation used for calculating said actual values, using reference values of the at least one air ambient parameter of the ambient at which the specific food product should have been exposed under desired or optimal air ambient conditions,
- wherein said storage quality variable is a variable selected among at least one of water mass transfer rate indicative of water weight loss of the specific food product and shelf-life based time reduction indicative of microbial proliferation of the specific food product,
and wherein the method comprises;
- obtaining a food storage quality index for the specific food product to monitor the storage quality of said specific food product by relating at least one of said actual values of at least one of said storage quality variables with said desired or optimal value of the same storage quality variable;
wherein said food storage quality index is expressed:

- as a percentile (DI, SLI) indicating proximity to the desired value of the storage quality variable, or
- as a time multiplier (DA, SLA) of the actual time the food product has been exposed to at least one of the air ambient parameters to allow to compute an effective exposed time in terms of the selected storage quality variable, had the food product being exposed to the at least one reference value of the air ambient parameter under desired or optimal air ambient conditions;

wherein said storage quality variable is the water mass transfer rate indicative of water weight loss of the specific food product and said method comprises;

- performing and recording with a given temporal frequency a plurality of measurements of at least air ambient temperature and air ambient relative humidity at which the specific food product is exposed during said pre-set time,
- calculating by means of an equation actual values of the water mass transfer rate of the specific food product using said measured and recorded values of air ambient temperature and air ambient relative humidity,
- retrieving a desired value of water mass transfer rate, said desired value being calculated by means of the same equation using reference values of at least air ambient temperature and air ambient relative humidity at which the specific food product should have been exposed under the desired or optimal air ambient conditions, and
- obtaining a food storage quality drying index for the specific food product to monitor the storage quality of said specific food product by relating at least one of said actual values of water mass transfer rate with the desired or optimal value of the water mass transfer rate;

wherein said food storage quality index is expressed:

- as a percentile (DI) indicating proximity to the desired or optimal value of water mass transfer rate of the specific food product, and computed by the equation;

$$DI = \frac{mt_o}{mt_a} \cdot 100$$

or
- as a time multiplier (DA) of the time the food product has been exposed to said measured values of air ambient temperature and air ambient relative humidity, and computed by the equation;

$$DA = \frac{mt_a}{mt_o} \cdot 1$$

where;

$mt_0$ is the desired value of water mass transfer rate (Kg/m$^2$ s) at the reference values of air ambient temperature and air ambient relative humidity, and
$mt_a$ is the calculated values of water mass transfer rate at the measured values of air ambient temperature and air ambient relative humidity,

and wherein the actual and the desired or optimal values of water mass transfer rate are calculated by means of the equation:

$$mt = \left( a \cdot mt_{natural} + b \cdot mt_{forced} \right)$$

where:

$mt_{natural}$ is the water mass transfer rate (Kg/m$^2$ s) under air natural convection conditions,
$mt_{forced}$ is the water mass transfer rate (Kg/m$^2$ s) under air forced convection conditions, and
$a$ and $b$ are fraction of the exposed time under either air natural or forced convection conditions.

2. A method according to claim 1, further comprising computing by using said food storage quality index expressed as a time multiplier (DA), the effective exposed time in terms of water mass transfer rate, had the food product being exposed to the reference values of air ambient temperature and air ambient relative humidity.

3. A computer implemented method for monitoring storage quality of a specific food product during transport and/or storage comprising;

- performing and recording, with a given temporal frequency, a plurality of measurements of at least one air ambient parameter of the ambient at which the specific food product is exposed during a pre-set time of at least two segments of the cold chain of said specific food product, including two or more of the following: production, processing, transport, food-retail, and food-service,
- calculating by means of an equation actual values of a storage quality variable indicative of a storage quality condition of the specific food product, using said measured and recorded values of the at least one air ambient parameter,
- retrieving a desired or optimal value of said storage quality variable for the specific food product, said desired value being calculated by means of the same equation used for calculating said actual values, using reference values of the at least one air ambient parameter of the ambient at which the specific food product should have been exposed under desired or optimal air ambient conditions,
- wherein said storage quality variable is a variable selected among at least one of water mass transfer rate indicative of water weight loss of the specific food product and shelf-life based time reduction indicative of microbial proliferation of the specific food product,
and wherein the method comprises;
- obtaining a food storage quality index for the specific food product to monitor the storage quality of said specific food product by relating at least one of said actual values of at least one of said storage quality variables with said desired or optimal value of the same storage quality variable;
wherein said food storage quality index is expressed:

- as a percentile (DI, SLI) indicating proximity to the desired value of the storage quality variable, or
- as a time multiplier (DA, SLA) of the actual time the food product has been exposed to at least one of the air ambient parameters to allow to compute an effective exposed time in terms of the selected storage quality variable, had the food product being exposed to the at least one reference value of the air ambient parameter under desired or optimal air ambient conditions;

wherein said storage quality variable is the shelf-life based time reduction of the food product and said method comprises;

- performing and recording with a given temporal frequency a plurality of measurements of air ambient temperature, at which the specific food product is exposed during said pre-set time,
- calculating by means of an equation actual values of shelf-life based time reduction using measured values of air ambient temperature,
- retrieving a desired value of shelf-life based time reduction, said desired value being calculated by means of the same equation using reference values of air ambient temperature, at which the specific food product should have been exposed under desired or optimal air ambient conditions and;
- obtaining a food storage quality shelf-life index for the specific food product to monitor the storage quality of said specific food product by relating at least one of said actual values of shelf-life based reduction time with the desired or optimal value of the shelf-life based reduction time;

and wherein said food storage quality index is expressed:

- as a percentile (SLI) indicating proximity to the desired value of shelf-life based time reduction of the specific food product, and computed by the equation;

$$SLI = \frac{esl_{sp}}{esl_{T}} \cdot 100$$

or
- as a time multiplier (SLA) of the actual time the food product has been exposed to said measured values of air ambient temperature, and computed by the equation;

$$SLA = \frac{esl_{T}}{esl_{sp}} \cdot 1$$

where;

$esl_{sp}$ is the desired elapsed shelf-life time value at the reference value of air ambient temperature,
$esl_{T}$ is the calculated elapsed shelf-life time values at the recorded measured values of air ambient temperature,

and wherein the calculated and desired values of elapsed shelf-life time are computed by the equations:

$$rsl = \left( a \cdot (T - T_{sp}) + 1 \right)^{b}$$

$$esl = time_{sample} \cdot rsl$$

Where:

$T$ are the recorded and measured values of air ambient temperature at which the food product has been exposed,
$T_{sp}$ is the reference value of air ambient temperature under desired and optimal air ambient conditions,
$time_{sample}$ is the time at which the food product has been exposed to the recorded and measured values of air ambient temperature or to the reference value of air ambient temperature,
*rsl* is the relative shelf-life based time reduction or relative elapsed shelf-life time, and
*a and b* are recorded coefficients which depend on the specific food product.

4. A method according to claim 3, further comprising computing the effective exposed time in terms of shelf-life base time reduction using said food storage quality index expressed as a time multiplier (SLA), had the food product being exposed to corresponding reference values of air ambient temperature.

5. A method according to any of the previous claims, wherein the specific food product is a perishable food product selected among at least one of fruits, vegetables, meat, fish and dairy products.

6. A system for monitoring storage quality of a specific food product during transport and/or storage comprising;

- at least one sensor configured and arranged for performing with a given temporal frequency a plurality of measurements of at least one air ambient parameter of the ambient at which the specific food product is exposed during a pre-set time of at least two segments of the cold chain of said specific food product, including two or more of the following: production, processing, transport, food-retail, and food-service; and
- computing means configured and arranged for;

- receiving and recording measurement data coming from said at least one sensor,
- calculating by means of an equation actual values of a storage quality variable indicative of a storage quality condition of the specific food product, using the measured data values coming from said at least one sensor, wherein said storage quality variable is a variable selected among at least one of water mass transfer rate indicative of water weight loss of the specific food product and shelf-life based time reduction indicative of microbial proliferation of the specific food product,
- retrieving data representative of a desired or optimal value of said storage quality variable, wherein said desired or optimal values have been obtained by calculation with the same equation used for calculating said actual values, using reference values of the at least one air ambient parameter of the ambient at which the specific food product should have been exposed under desired or optimal air ambient conditions, and for;
- processing the actual values of said storage quality variable according to the method of any of claims 1 to 5 to obtain a food storage quality index for the specific food product to monitor the storage quality of the specific food product.

7. A system according to claim 6, wherein;

- said computing means comprise a wireless communication module adapted to receive signals representative of the measuring data coming from said at least one sensor, and
- the system comprises at least one measuring unit including the at least one sensor and a wireless communication module adapted to transmit signals representative of the measuring data of said at least one sensor to the computing means during a pre-set time.

**Patentansprüche**

1. Computerimplementiertes Verfahren zum Überwachen von Lagerungsqualität eines spezifischen Lebensmittelprodukts während Transports und/oder Lagerung, umfassend;

- Ausführen und Aufzeichnen mehrerer Messungen wenigstens eines Luftumgebungsparameters der Umgebung, der das spezifische Lebensmittelprodukt ausgesetzt ist, während einer vorgegebenen Zeitdauer wenigstens zweier Abschnitte der Kühlkette des spezifischen Lebensmittelprodukts, die zwei oder mehr der Folgenden enthält: Produktion, Verarbeitung, Transport, Lebensmitteleinzelhandel und Gastronomie, mit einer gegebenen zeitlichen Häufigkeit,
- Berechnen tatsächlicher Werte einer Lagerungsqualitätsvariablen, die indikativ für eine Lagerungsqualitätsbedingung des spezifischen Lebensmittelprodukts ist, mittels einer Gleichung unter Verwendung der gemessenen und aufgezeichneten Werte des wenigstens einen Luftumgebungsparameters,
- Auslesen eines gewünschten oder optimalen Werts der Lagerungsqualitätsvariablen für das spezifische Lebensmittelprodukt, wobei der gewünschte Wert mittels derselben Gleichung berechnet wird, die zum Berechnen der tatsächlichen Werte verwendet wird, unter Verwendung von Bezugswerten des wenigstens einen Luftumgebungsparameters der Umgebung, der das spezifische Lebensmittelprodukt unter gewünschten oder optimalen Luftumgebungsbedingungen ausgesetzt gewesen sein sollte,
- wobei die Lagerungsqualitätsvariable eine Variable ist, die unter wenigstens einer Wassermassen-Transportrate gewählt wird, die indikativ für den Wassergewichtsverlust des spezifischen Lebensmittelprodukts ist, und einer auf Haltbarkeitsdauer beruhenden Zeitverkürzung, die indikativ für Mikrobenvermehrung des spezifischen Lebensmittelprodukts angibt,
und wobei das Verfahren umfasst;
- Erhalten eines Lebensmittel-Lagerungsqualitätsindex für das spezifische Lebensmittelprodukt zum Überwachen der Lagerungsqualität des spezifischen Lebensmittelprodukts dadurch, dass wenigstens einer der tatsächlichen Werte wenigstens einer der Lagerungsqualitätsvariablen mit dem gewünschten oder optimalen Wert derselben Lagerungsqualitätsvariablen in Beziehung gesetzt wird;
wobei der Lebensmittel-Lagerungsqualitätsindex ausgedrückt wird:

- als ein Perzentil (DI, SLI), das eine Nähe zu dem gewünschten Wert der Lagerungsqualitätsvariablen angibt, oder
- als ein Zeitmultiplikator (DA, SLA) der tatsächlichen Zeitdauer, die das Lebensmittelprodukt wenigstens einem der Luftumgebungsparameter ausgesetzt gewesen ist, um zu ermöglichen, dass eine effektive Zeitdauer berechnet wird, die es hinsichtlich der ausgewählten Lagerungsqualitätsvariablen ausgesetzt ist, falls das Lebensmittelprodukt dem wenigstens einen Bezugswert des Luftumgebungsparameters unter gewünschten oder optimalen Luftumgebungsparameter ausgesetzt gewesen wäre;

wobei die Lagerungsqualitätsvariable die Wassermassen-Transportrate ist, die indikativ für einen Wassergewichtsverlust des spezifischen Lebensmittelprodukts ist, und wobei das Verfahren umfasst;

- Ausführen und Aufzeichnen mehrerer Messungen wenigstens von Luftumgebungstemperatur und relativer Feuchtigkeit der Luftumgebung, denen das spezifische Lebensmittelprodukt während der vorgegebenen Zeitdauer ausgesetzt ist, mit einer gegebenen zeitlichen Häufigkeit,
- Berechnen tatsächlicher Werte der Wassermassen-Transportrate des spezifischen Lebensmittelprodukts unter Verwendung der gemessenen und aufgezeichneten Werte der Luftumgebungstemperatur und der relativen Feuchtigkeit der Luftumgebung mittels einer Gleichung,
- Auslesen eines gewünschten Werts der Wassermassen-Transportrate, wobei der gewünschte Wert mittels derselben Gleichung berechnet wird, unter Verwendung von Bezugswerten wenigstens Luftumgebungstemperatur und relativer Feuchtigkeit der Luftumgebung, denen das spezifische Lebensmittelprodukt unter den gewünschten oder optimalen Luftumgebungsbedingungen ausgesetzt gewesen sein sollte, und
- Erhalten eines Lebensmittel-Lagerungsqualität-Trocknungsindex für das spezifische Lebensmittelprodukt, um die Lagerungsqualität des spezifischen Lebensmittelprodukts zu überwachen, dadurch, dass wenigstens einer der tatsächlichen Werte der Wassermassen-Transportrate mit dem gewünschten oder optimalen Wert der Wassermassen-Transportrate in Beziehung gesetzt wird;

wobei der Lebensmittel-Lagerungsqualitätsindex ausgedrückt wird:

- als ein Perzentil (DI), das Nähe zu dem gewünschten oder optimalen Wert der Wassermassen-Transportrate des spezifischen Lebensmittelprodukts angibt und das durch die Gleichung berechnet wird;

$$DI = \frac{mt_0}{mt_a} \cdot 100$$

oder
- als ein Zeitmultiplikator (DA) der Zeitdauer, die das Lebensmittelprodukt den gemessenen Werten von Luftumgebungstemperatur und relativer Feuchtigkeit der Luftumgebung ausgesetzt gewesen ist, und der durch die Gleichung berechnet wird;

$$DA = \frac{mt_a}{mt_o} \cdot 1,$$

wobei;

$mt_o$ der gewünschte Wert der Wassermassen-Transportrate (kg/m$^2$s) bei den Bezugswerten von Luftumgebungstemperatur und relativer Feuchtigkeit der Luftumgebung ist, und

$mt_a$ die berechneten Werte von Wassermassen-Transportrate bei den gemessenen Werten von Umgebungstemperatur und relativer Feuchtigkeit der Luftumgebung sind,

und wobei der tatsächliche und der gewünschte oder optimale Wert von Wassermassen-Transportrate mittels der Gleichung berechnet werden:

$$mt = \left( a \cdot mt_{natural} + b \cdot mt_{forced} \right),$$

wobei:

$mt_{natural}$ die Wassermassen-Transportrate (kg/m$^2$s) unter natürlichen Luftkonventionsbedingungen ist,

$mt_{forced}$ die Wassermassen-Transportrate (kg/m$^2$s) unter erzwungenen Luftkonvektionsbedingungen ist, und

$a$ und $b$ Bruchteile der Zeitdauer, die es entweder den natürlichen oder den erzwungenen Luftkonvektionsbedingungen ausgesetzt gewesen ist, sind.

2. Verfahren nach Anspruch 1, das ferner umfasst, Berechnen der effektiven Zeitdauer, die es hinsichtlich Wassermassen-Transportrate ausgesetzt gewesen wäre, unter Verwendung des als ein Zeitmultiplikator (DA) ausgedrückten Lebensmittel-Lagerungsqualitätsindex, falls das Lebensmittelprodukt den Bezugswerten von Luftumgebungstemperatur und relativer Feuchtigkeit der Luftumgebung ausgesetzt gewesen wäre,.

3. Computerimplementiertes Verfahren zum Überwachen vonLagerungsqualität eines spezifischen Lebensmittelprodukts während Transport und/oder Lagerung, umfassend;

- Ausführen und Aufzeichnen mehrerer Messungen wenigstens eines Luftumgebungsparameters der Umgebung ,mit einer gegebenen zeitlichen Häufigkeit, der das spezifische Lebensmittelprodukt ausgesetzt ist, während einer vorgegebenen Zeitdauer wenigstens zweier Abschnitte der Kühlkette des spezifischen Lebensmittelprodukts, die zwei oder mehr der Folgenden enthält: Produktion, Verarbeitung, Transport, Lebensmitteleinzelhandel und Gastronomie,

- Berechnen tatsächlicher Werte einer Lagerungsqualitätsvariablen, die indikativ für eine Lagerungsqualitätsbedingung des spezifischen Lebensmittelprodukts ist, mittels einer Gleichung unter Verwendung der gemessenen und aufgezeichneten Werte des wenigstens einen Luftumgebungsparameters,

- Auslesen eines gewünschten oder optimalen Werts der Lagerungsqualitätsvariablen für das spezifische Lebensmittelprodukt, wobei der gewünschte Wert mittels derselben Gleichung berechnet wird, die zum Berechnen der tatsächlichen Werte verwendet wird, unter Verwendung von Bezugswerten des wenigstens einen Luftumgebungsparameters der Umgebung, der das spezifische Lebensmittelprodukt unter gewünschten oder optimalen Luftumgebungsbedingungen ausgesetzt gewesen sein sollte,

- wobei die Lagerungsqualitätsvariable eine Variable ist, die unter wenigstens einer von Wassermassen-Transportrate gewählt wird, die indikativ für Wassergewichtsverlust des spezifischen Lebensmittelprodukts ist, und einer auf Haltbarkeitsdauer beruhenden Zeitverkürzung, die indikativ für Mikrobenvermehrung des spezifischen Lebensmittelprodukts ist,

und wobei das Verfahren umfasst;

- Erhalten eines Lebensmittel-Lagerungsqualitätsindex für das spezifische Lebensmittelprodukt zum Überwachen der Lagerungsqualität des spezifischen Lebensmittelprodukts dadurch, dass wenigstens einer der tatsächlichen Werte wenigstens einer der Lagerungsqualitätsvariablen mit dem gewünschten oder optimalen Wert derselben Lagerungsqualitätsvariablen in Beziehung gesetzt wird;

wobei der Lebensmittel-Lagerungsqualitätsindex ausgedrückt wird:

- als ein Perzentil (DI, SLI), das Nähe zu dem gewünschten Wert der Lagerungsqualitätsvariablen angibt, oder

- als ein Zeitmultiplikator (DA, SLA) der tatsächlichen Zeitdauer, die das Lebensmittelprodukt wenigstens einem der Luftumgebungsparameter ausgesetzt gewesen ist, um zu ermöglichen, dass eine effektive Zeitdauer berechnet wird, die es hinsichtlich der ausgewählten Lagerungsqualitätsvariablen ausgesetzt ist, falls das Lebensmittelprodukt dem wenigstens einen Bezugswert des Luftumgebungsparameters unter gewünschten oder optimalen Luftumgebungsparameter ausgesetzt gewesen wäre;

wobei die Lagerungsqualitätsvariable die auf der Haltbarkeitsdauer beruhende Zeitverringerung des Lebensmittelprodukts ist, und wobei das Verfahren umfasst;

- Ausführen und Aufzeichnen mehrerer Messungen von Luftumgebungstemperatur, der das spezifische Lebensmittelprodukt während der vorgegebenen Zeitdauer ausgesetzt ist, mit einer gegebenen zeitlichen Häufigkeit,
- Berechnen tatsächlicher Werte der auf Haltbarkeitsdauer beruhenden Zeitverkürzung unter Verwendung gemessener Werte von Luftumgebungstemperatur mittels einer Gleichung,
- Auslesen eines gewünschten Werts der auf Haltbarkeitsdauer beruhenden Zeitverkürzung, wobei der gewünschte Wert mittels derselben Gleichung berechnet wird, unter Verwendung von Bezugswerten von Luftumgebungstemperatur, der das spezifische Lebensmittelprodukt unter gewünschten oder optimalen Luftumgebungsbedingungen ausgesetzt gewesen sein sollte, und;
- Erhalten eines Lebensmittel-Lagerungsqualität-Haltbarkeitsdauerindex für das spezifische Lebensmittelprodukt, um die Lagerungsqualität des spezifischen Lebensmittelprodukts zu überwachen, dadurch, dass wenigstens einer der tatsächlichen Werte von auf der Haltbarkeitsdauer beruhender Verkürzungszeit mit dem gewünschten oder optimalen Wert der auf Haltbarkeitsdauer beruhenden Verkürzungszeit in Beziehung gesetzt wird;

und wobei der Lebensmittel-Lagerungsqualitätsindex ausgedrückt wird:

- als ein Perzentil (SLI), das Nähe zu dem gewünschten Wert der auf Haltbarkeitsdauer beruhenden Zeitverkürzung des spezifischen Lebensmittelprodukts angibt und das durch die Gleichung berechnet wird;

$$SLI = \frac{esl_{sp}}{esl_T} \cdot 100$$

oder
- als ein Zeitmultiplikator (SLA) der tatsächlichen Zeitdauer, die das Lebensmittelprodukt den gemessenen Werten vonLuftumgebungstemperatur ausgesetzt gewesen ist, und der durch die Gleichung berechnet wird;

$$SLA = \frac{esl_T}{esl_{sp}} \cdot 1,$$

wobei;

$esl_{sp}$ der gewünschte Wert von verstrichener Haltbarkeitsdauer bei dem Bezugswert von Luftumgebungstemperatur ist,
$esl_T$ der berechnete Wert von verstrichener Haltbarkeitsdauer bei den aufgezeichneten gemessenen Werten von Umgebungstemperatur ist, und wobei die berechneten und gewünschten Werte von verstrichener Haltbarkeitsdauer mittels der Gleichungen berechnet werden:

$$rsl = \left(a \cdot \left(T - T_{sp}\right) + 1\right)^b,$$

$$esl = time_{sample} \cdot rsl,$$

wobei:

$T$ die aufgezeichneten und gemessenen Werte vonLuftumgebungstemperatur sind, der das Lebensmittelprodukt ausgesetzt gewesen ist,
$T_{sp}$ der Bezugswert von Luftumgebungstemperatur unter gewünschten und optionalen Luftumgebungsbedingungen ist,
$time_{sample}$ die Zeitdauer ist, der das Lebensmittelprodukt den aufgezeichneten und den gemessenen Werten von Umgebungstemperatur oder dem Bezugswert von Luftumgebungstemperatur ausgesetzt gewesen ist,

*rsl* die relative auf Haltbarkeitsdauer beruhende Zeitverkürzung oder relative verstrichene Haltbarkeitsdauer ist,

und

*a* und *b* aufgezeichnete Koeffizienten sind, die von dem spezifischen Lebensmittelprodukt abhängen.

4. Verfahren nach Anspruch 3, das ferner Berechnen der effektiven Zeitdauer umfasst, die es hinsichtlich der auf Haltbarkeitsdauer beruhenden Zeitverkürzung ausgesetzt gewesen ist, unter Verwendung des Lebensmittel-Lagerungsqualitätsindex, ausgedrückt als ein Zeitmultiplikator (SLA), falls das Lebensmittelprodukt entsprechenden Bezugswerten von Luftumgebungstemperatur ausgesetzt gewesen wäre.

5. Verfahren nach einem der vorhergehenden Ansprüche, wobei das spezifische Lebensmittelprodukt ein verderbliches Lebensmittelprodukt ist, das wenigstens unter einem von Obst, Gemüse, Fleisch, Fisch und Milchprodukten gewählt wird.

6. System zum Überwachen von Lagerungsqualität eines spezifischen Lebensmittelprodukts während Transport und/oder Lagerung, umfassend;

   - wenigstens einen Sensor, der konfiguriert und ausgelegt ist, mit einer gegebenen zeitlichen Häufigkeit mehrere Messungen wenigstens eines Luftumgebungsparameters der Umgebung auszuführen, der das spezifische Lebensmittelprodukt während einer vorgegebenen Zeitdauer wenigstens zweier Abschnitte der Kühlkette des spezifischen Lebensmittelprodukts ausgesetzt ist, die zwei oder mehr der Folgenden enthält: Produktion, Verarbeitung, Transport, Lebensmitteleinzelhandel und Gastronomie ,; und
   - Rechenmittel, die konfiguriert und ausgelegt sind zum;

     - Empfangen und Aufzeichnen von Messdaten, die von dem wenigstens einen Sensor kommen,
     - Berechnen tatsächlicher Werte einer Lagerungsqualitätsvariablen, die indikativ für eine Lagerungsqualitätsbedingung des spezifischen Lebensmittelprodukts ist, mittels einer Gleichung unter Verwendung der gemessenen Datenwerte, die von dem wenigstens einen Sensor kommen, wobei die Lagerungsqualitätsvariable Variable ist, die unter wenigstens einer von Wassermassen-Transportrate gewählt wird, die indikativ für Wassergewichtsverlust des spezifischen Lebensmittelprodukts ist, und auf Haltbarkeitsdauer beruhender Zeitverkürzung, die indikativ für Mikrobenvermehrung des spezifischen Lebensmittelproduktsist,
     - Auslesen von Daten, die einen gewünschten oder optimalen Wert der Lagerungsqualitätsvariablen repräsentieren, wobei die gewünschten oder optimalen Werte durch Berechnen mit derselben Gleichung erhalten wordensind , die zum Berechnen der tatsächlichen Werte verwendet wird, unter Verwendung von Bezugswerten des wenigstens einen Luftumgebungsparameters der Umgebung, der das spezifische Lebensmittelprodukt unter gewünschten oder optimalen Luftumgebungsbedingungen ausgesetzt gewesen sein sollte, und zum;
     - Verarbeiten der tatsächlichen Werte der Lagerungsqualitätsvariablen gemäß dem Verfahren nach einem der Ansprüche 1 bis 5, um einen Lebensmittel-Lagerungsqualitätsindex für das spezifische Produkt zum Überwachen der Lagerungsqualität des spezifischen Lebensmittelprodukts zu erhalten.

7. System nach Anspruch 6, wobei;

   - die Rechenmittel ein drahtloses Kommunikationsmodul umfassen, das ausgelegt ist, Signale zu empfangen, die die Messdaten repräsentieren, die von dem wenigstens einen Sensor kommen, und
   - das System wenigstens eine Messeinheit umfasst, die den wenigstens einen Sensor enthält, und ein drahtloses Kommunikationsmodul, das ausgelegt ist, Signale, die die Messdaten des wenigstens einen Sensors repräsentieren, während einer vorgegebenen Zeitdauer an die Rechenmittel zu senden.

## Revendications

1. Procédé mis en œuvre par ordinateur de surveillance de la qualité de stockage d'un produit alimentaire spécifique pendant un transport et/ou un stockage, comprenant les étapes consistant à :

   - réaliser et enregistrer, avec une fréquence temporelle donnée, une pluralité de mesures d'au moins un paramètre d'air ambiant de l'environnement auquel le produit alimentaire spécifique est exposé pendant un temps prédéfini d'au moins deux segments de la chaîne du froid dudit produit alimentaire spécifique, incluant deux ou plus parmi : production, transformation, transport, vente au détail d'aliments et service d'aliments,
- calculer au moyen d'une équation des valeurs réelles d'une variable de qualité de stockage indicative d'une condition de qualité de stockage du produit alimentaire spécifique, en utilisant lesdites valeurs mesurées et enregistrées du au moins un paramètre d'air ambiant,
- récupérer une valeur souhaitée ou optimale de ladite variable de qualité de stockage pour le produit alimentaire spécifique, ladite valeur souhaitée étant calculée au moyen de la même équation utilisée pour calculer lesdites valeurs réelles, en utilisant des valeurs de référence du au moins un paramètre d'air ambiant de l'environnement auquel le produit alimentaire spécifique aurait dû être exposé dans des conditions d'air ambiant souhaitées ou optimales,
- dans lequel ladite variable de qualité de stockage est une variable sélectionnée parmi au moins un parmi un taux de transfert de masse d'eau indicatif d'une perte de poids d'eau du produit alimentaire spécifique et une réduction de temps basée sur la durée de conservation indicative de la prolifération microbienne du produit alimentaire spécifique,
et dans lequel le procédé comprend l'étape consistant à :

- obtenir un indice de qualité de stockage d'aliment pour le produit alimentaire spécifique afin de surveiller la qualité de stockage dudit produit alimentaire spécifique en mettant en relation au moins une desdites valeurs réelles d'au moins une desdites variables de qualité de stockage avec ladite valeur souhaitée ou optimale de la même variable de qualité de stockage ;

dans lequel ledit indice de qualité de stockage d'aliment est exprimé :

- sous la forme d'un percentile (DI, SLI) indiquant la proximité de la valeur souhaitée de la variable de qualité de stockage, ou
- sous la forme d'un multiplicateur de temps (DA, SLA) du temps réel pendant lequel le produit alimentaire a été exposé à au moins un des paramètres d'air ambiant pour permettre de calculer un temps d'exposition effectif en termes de la variable de qualité de stockage sélectionnée, si le produit alimentaire avait été exposé à la au moins une valeur de référence du paramètre d'air ambiant dans des conditions d'air ambiant souhaitées ou optimales ;

dans lequel ladite variable de qualité de stockage est le taux de transfert de masse d'eau indicatif d'une perte de poids d'eau du produit alimentaire spécifique, et ledit procédé comprend les étapes consistant à :

- réaliser et enregistrer avec une fréquence temporelle donnée une pluralité de mesures d'au moins la température d'air ambiant et l'humidité relative d'air ambiant auxquelles le produit alimentaire spécifique est exposé pendant ledit temps prédéfini,
- calculer, au moyen d'une équation, des valeurs réelles du taux de transfert de masse d'eau du produit alimentaire spécifique en utilisant lesdites valeurs mesurées et enregistrées de la température d'air ambiant et de l'humidité relative d'air ambiant,
- récupérer une valeur souhaitée de taux de transfert de masse d'eau, ladite valeur souhaitée étant calculée au moyen de la même équation en utilisant des valeurs de référence d'au moins la température d'air ambiant et l'humidité relative d'air ambiant auxquelles le produit alimentaire spécifique aurait dû être exposé dans les conditions d'air ambiant souhaitées ou optimales, et
- obtenir un indice de séchage de qualité de stockage d'aliment pour le produit alimentaire spécifique afin de surveiller la qualité de stockage dudit produit alimentaire spécifique en mettant en relation au moins une desdites valeurs réelles de taux de transfert de masse d'eau avec la valeur souhaitée ou optimale du taux de transfert de masse d'eau ;

dans lequel ledit indice de qualité de stockage d'aliment est exprimé :

- sous la forme d'un percentile (DI) indiquant la proximité de la valeur souhaitée ou optimale du taux de transfert de masse d'eau du produit alimentaire spécifique, et calculé par l'équation ;

$$DI = \frac{mt_o}{mt_a} \cdot 100$$

ou

- sous la forme d'un multiplicateur de temps (DA) du temps pendant lequel le produit alimentaire a été exposé auxdites valeurs mesurées de la température d'air ambiant et de l'humidité relative d'air ambiant, et calculé par l'équation ;

$$DA = \frac{mt_a}{mt_o} \cdot 1$$

où ;

$mt_o$ est la valeur souhaitée du taux de transfert de masse d'eau (Kg/m$^2$ s) aux valeurs de référence de la température d'air ambiant et de l'humidité relative d'air ambiant, et

$mt_a$ est les valeurs calculées du taux de transfert de masse d'eau aux valeurs mesurées de la température d'air ambiant et de l'humidité relative d'air ambiant, et dans lequel les valeurs réelles et les valeurs souhaitées ou optimales du taux de transfert de masse d'eau sont calculées au moyen de l'équation :

$$mt = (a \cdot mt_{natural} + b \cdot mt_{forced}$$

où :

$mt_{natural}$ est le taux de transfert de masse d'eau (Kg/m$^2$ s) dans des conditions de convection naturelle de l'air,

$mt_{forced}$ est le taux de transfert de masse d'eau (kg/m$^2$ s) dans des conditions de convection forcée de l'air, et

$a$ et $b$ sont une fraction du temps d'exposition dans des conditions de convection naturelle ou forcée de l'air.

2.  Procédé selon la revendication 1, comprenant en outre un calcul en utilisant ledit indice de qualité de stockage d'aliment exprimé en tant que multiplicateur de temps (DA), le temps d'exposition effectif en termes de taux de transfert de masse d'eau, si le produit alimentaire était exposé aux valeurs de référence de température d'air ambiant et d'humidité relative d'air ambiant.

3.  Procédé mis en œuvre par ordinateur de surveillance de la qualité de stockage d'un produit alimentaire spécifique pendant un transport et/ou un stockage, comprenant les étapes consistant à :

- réaliser et enregistrer, avec une fréquence temporelle donnée, une pluralité de mesures d'au moins un paramètre d'air ambiant de l'environnement auquel le produit alimentaire spécifique est exposé pendant un temps prédéfini d'au moins deux segments de la chaîne du froid dudit produit alimentaire spécifique, incluant deux ou plus parmi : production, transformation, transport, vente au détail d'aliments et service d'aliments,
- calculer au moyen d'une équation des valeurs réelles d'une variable de qualité de stockage indicative d'une condition de qualité de stockage du produit alimentaire spécifique, en utilisant lesdites valeurs mesurées et enregistrées du au moins un paramètre d'air ambiant,
- récupérer une valeur souhaitée ou optimale de ladite variable de qualité de stockage pour le produit alimentaire spécifique, ladite valeur souhaitée étant calculée au moyen de la même équation utilisée pour calculer lesdites valeurs réelles, en utilisant des valeurs de référence du au moins un paramètre d'air ambiant de l'environnement auquel le produit alimentaire spécifique aurait dû être exposé dans des conditions d'air ambiant souhaitées ou optimales,
- dans lequel ladite variable de qualité de stockage est une variable sélectionnée parmi au moins un parmi un taux de transfert de masse d'eau indicatif d'une perte de poids d'eau du produit alimentaire spécifique et une réduction de temps basée sur la durée de conservation indicative de la prolifération microbienne du produit alimentaire spécifique,
et dans lequel le procédé comprend l'étape consistant à :

- obtenir un indice de qualité de stockage d'aliment pour le produit alimentaire spécifique afin de surveiller la qualité de stockage dudit produit alimentaire spécifique en mettant en relation au moins une desdites valeurs réelles d'au moins une desdites variables de qualité de stockage avec ladite valeur souhaitée ou optimale de la même variable de qualité de stockage ;

dans lequel ledit indice de qualité de stockage d'aliment est exprimé :

- sous la forme d'un percentile (DI, SLI) indiquant la proximité de la valeur souhaitée de la variable de qualité de stockage, ou
- sous la forme d'un multiplicateur de temps (DA, SLA) du temps réel pendant lequel le produit alimentaire a été exposé à au moins un des paramètres d'air ambiant pour permettre de calculer un temps d'exposition effectif en termes de la variable de qualité de stockage sélectionnée, si le produit alimentaire avait été exposé à la au moins une valeur de référence du paramètre d'air ambiant dans des conditions d'air ambiant souhaitées ou optimales ;

dans lequel ladite variable de qualité de stockage est la réduction de temps basée sur la durée de conservation du produit alimentaire, et ledit procédé comprend les étapes consistant à :

- réaliser et enregistrer avec une fréquence temporelle donnée une pluralité de mesures de la température d'air ambiant à laquelle le produit alimentaire spécifique est exposé pendant ledit temps prédéfini,
- calculer, au moyen d'une équation, des valeurs réelles de réduction de temps basée sur la durée de conservation en utilisant des valeurs mesurées de la température d'air ambiant,
- récupérer une valeur souhaitée de réduction de temps basée sur la durée de conservation, ladite valeur souhaitée étant calculée au moyen de la même équation en utilisant des valeurs de référence de la température d'air ambiant, à laquelle le produit alimentaire spécifique aurait dû être exposé dans des conditions d'air ambiant souhaitées ou optimales et ;
- obtenir un indice de durée de conservation de qualité de stockage d'aliment pour le produit alimentaire spécifique afin de surveiller la qualité de stockage dudit produit alimentaire spécifique en mettant en relation au moins une desdites valeurs réelles de temps de réduction basé sur la durée de conservation avec la valeur souhaitée ou optimale du temps de réduction basé sur la durée de conservation ;

et dans lequel ledit indice de qualité de stockage d'aliment est exprimé :

- sous la forme d'un percentile (SLI) indiquant la proximité de la valeur souhaitée de la réduction de temps basée sur la durée de conservation du produit alimentaire spécifique, et calculé par l'équation ;

$$SLI = \frac{esl_{sp}}{esl_T} \cdot 100$$

- sous la forme d'un multiplicateur de temps (SLA) du temps réel pendant lequel le produit alimentaire a été exposé auxdites valeurs mesurées de la température d'air ambiant, et calculé par l'équation ;

$$SLA = \frac{esl_T}{esl_{sp}} \cdot 1$$

où ;

$esl_{sp}$ est la valeur de durée de conservation écoulée souhaitée à la valeur de référence de la température d'air ambiant,
$esl_T$ est les valeurs de durée de conservation écoulées calculées aux valeurs mesurées enregistrées de la température d'air ambiant,
et dans lequel les valeurs calculées et souhaitées de durée de conservation écoulée sont calculées par les équations :

$$rsl = (a \cdot (T - T_{sp}) + 1)^b$$

$$esl = time_{sample} \cdot rsl$$

où :

> $T$ sont les valeurs enregistrées et mesurées de la température d'air ambiant à laquelle le produit alimentaire a été exposé,
> $T_{sp}$ est la valeur de référence de la température d'air ambiant dans des conditions d'air ambiant souhaitées et optimales,
> $time_{sample}$ est le temps auquel le produit alimentaire a été exposé aux valeurs enregistrées et mesurées de la température d'air ambiant ou à la valeur de référence de la température d'air ambiant,
> $rsl$ est la réduction de temps de conservation basée sur la durée de conservation relative ou la durée de conservation écoulée relative, et
> $a$ et $b$ sont des coefficients enregistrés qui dépendent du produit alimentaire spécifique.

4. Procédé selon la revendication 3, comprenant en outre un calcul du temps d'exposition effectif en termes de réduction du temps basée sur la durée de conservation en utilisant ledit indice de qualité de stockage d'aliment exprimé en tant que multiplicateur de temps (SLA), si le produit alimentaire était exposé à des valeurs de référence correspondantes de la température d'air ambiant.

5. Procédé selon l'une quelconque des revendications précédentes, dans lequel le produit alimentaire spécifique est un produit alimentaire périssable choisi parmi au moins un parmi des fruits, des légumes, de la viande, du poisson et des produits laitiers.

6. Système de surveillance de la qualité de stockage d'un produit alimentaire spécifique pendant un transport et/ou un stockage, comprenant :

> - au moins un capteur configuré et agencé pour effectuer, avec une fréquence temporelle donnée, une pluralité de mesures d'au moins un paramètre d'air ambiant de l'environnement auquel le produit alimentaire spécifique est exposé pendant un temps prédéfini d'au moins deux segments de la chaîne du froid dudit produit alimentaire spécifique, incluant deux ou plus parmi : production, transformation, transport, vente au détail d'aliments et service d'aliments, et
> - des moyens de calcul configurés et agencés pour;

>> - recevoir et enregistrer des données de mesure provenant dudit au moins un capteur,
>> - calculer au moyen d'une équation des valeurs réelles d'une variable de qualité de stockage indicative d'une condition de qualité de stockage du produit alimentaire spécifique, en utilisant les valeurs de données mesurées provenant dudit au moins un capteur, dans lequel ladite variable de qualité de stockage est une variable sélectionnée parmi au moins un parmi un taux de transfert de masse d'eau indicatif d'une perte de poids d'eau du produit alimentaire spécifique et une réduction de temps basée sur la durée de conservation indicative d'une prolifération microbienne du produit alimentaire spécifique,
>> - récupérer des données représentatives d'une valeur souhaitée ou optimale de ladite variable de qualité de stockage, dans lequel lesdites valeurs souhaitées ou optimales ont été obtenues par calcul avec la même équation utilisée pour calculer lesdites valeurs réelles, en utilisant des valeurs de référence du au moins un paramètre d'air ambiant de l'environnement auquel le produit alimentaire spécifique aurait dû être exposé dans des conditions d'air ambiant souhaitées ou optimales, et pour ;
>> - traiter les valeurs réelles de ladite variable de qualité de stockage selon le procédé de l'une quelconque des revendications 1 à 5 afin d'obtenir un indice de qualité de stockage d'aliment pour le produit alimentaire spécifique afin de surveiller la qualité de stockage du produit alimentaire spécifique.

7. Système selon la revendication 6, dans lequel :

> - lesdits moyens de calcul comprennent un module de communication sans fil adapté pour recevoir des signaux représentatifs des données de mesure provenant dudit au moins un capteur, et
> - le système comprend au moins une unité de mesure incluant le au moins un capteur et un module de communication sans fil adapté pour transmettre des signaux représentatifs des données de mesure dudit au moins un capteur aux moyens de calcul pendant un temps prédéfini.

FIG. 1

FIG. 2

FIG.3

FIG. 4

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7401469 B2
- EP 1393276 B1

- US 2002161545 A1
- US 2019147396 A1

**Non-patent literature cited in the description**

- **THOMPSON J.** ; **A. KADER** ; **K. SYLVA**. Compatibility chart for fruits and vegetables in short-term transport or storage. *Oakland: Univ. Calif. Div. Ag. & Nat. Res. Publ.*, 1996, 21560
- **LIENHARD J.H.** Heat Transfer Texbook. Phlogiston Press, 2008
- **DOYLE, J.P.** Food Safety Standards and handbooks. 1989
- Seafood shelf life as a function of temperature. Alaska Sea Gram No. 30. Marine Advisory Program. University of Alaska, 1989
- *Food Code*, 2013
- **SPENCER, R.** ; **BAIANES, C.R.** The effect of temperature on the spoilage of wet white fish. I. Storage at constant temperatures between -1ºC and -25ºC. *Food Technology*, 1964, vol. 18, 769

- **OLLEY, J.** ; **RATKOWSKY D.A.** Temperature Function Integration and Its importance in the storage and distribution of flesh foods above the freezing point. *Journal of Food Technology in Australia*, 1973, vol. 25 (2), 66-73
- **THOMPSON, J.** ; **A. KADER** ; **K. SYLVA**. Compatibility chart for fruits and vegetables in short-term transport or storage. *Oakland: Univ. Calif. Ag. & Nat. Res. Publ.*, 1996, 21560
- THE REFRIGERATION AND FREEZING OF FOOD. **W. F. STOECKER**. Industrial Refrigeration Handbook. McGraw-Hill Professional, 1998, 17-1, 17-59